# EUROPÄISCHE PATENTSCHRIFT

(11) **EP 0 668 326 B1**
(45) Veröffentlichungstag und Bekanntmachung des Hinweises auf die Patenterteilung: **28.07.2004**
(21) Anmeldenummer: 95100809.3
(22) Anmeldetag: 21.01.1995
(51) Int. Cl.: C08L 83/06, C08L 83/08

(54) **Kovalent-nucleophil selbsthärtende Systeme**
Covalently-nucleophilic self-curing systems
Systèmes auto-réticulables de manière covalente-nucléophile

(30) Priorität: 18.02.1994 DE 4405261
(43) Veröffentlichungstag der Anmeldung: 23.08.1995
(73) Patentinhaber: Fraunhofer-Gesellschaft zur Förderung der angewandten Forschung e.V., 80686 München (DE)
(72) Erfinder: Wolter, Herbert, Dr., D-97950 Grossrinderfeld-Gerchsheim (DE); Storch, Werner, D-97080 Würzburg (DE)

(56) Entgegenhaltungen:
- EP-A- 0 230 342
- EP-A- 0 451 709
- DE-C- 4 125 201
- US-A- 4 579 782
- US-A- 4 698 406

## Beschreibung

Die Erfindung betrifft kovalent-nucleophil selbsthärtende Systeme auf der Basis polymerisierbarer und hydrolytisch kondensierbarer bzw. kondensierter Siliciumverbindungen. Die erfindungsgemäßen Systeme bestehen aus zwei Komponenten, einer Komponente 1 und einer Komponente 2, die gegebenenfalls übliche Additive und/oder Füllstoffe und gegebenenfalls weitere copolymerisierbare Monomere und/oder Oligomere und/oder weitere hydrolytisch kondensierbare und/oder kondensierte Verbindungen des Siliciums und gegebenenfalls anderer Elemente aus der Gruppe Al, Ti, Zr, B, P, Sn, Pb, der Übergangsmetalle, der Lanthaniden und der Actiniden enthalten. Ferner betrifft die Erfindung die Herstellung dieser Systeme sowie deren Verwendung. Insbesondere betrifft die vorliegende Erfindung kovalent-nucleophil selbsthärtende Systeme auf der Basis von Acrylaten und/oder Methacrylaten, deren Herstellung sowie deren Verwendung.

Selbsthärtende Kunststoffe sind seit langem in großer Zahl bekannt. Derartige Systeme finden für die verschiedensten Zwecke Verwendung, z.B. als Vergußmassen, Klebstoffe, Dichtungsmassen, Beschichtungsmassen, in Formgebungsverfahren, zur Füllstoffherstellung, als Komposit oder Bindemittel, in der Abform- und Verbindungstechnik und zur Herstellung von Fasern oder Folien etc. Aufgrund dieser vielfältigen Anwendungsmöglichkeiten besteht aber auch ein ständiges Bedürfnis nach Modifizierung der bereits bekannten Systeme, zum einen um dadurch neue Anwendungsgebiete zu erschließen, und zum anderen, um deren Eigenschaften für bestimmte Verwendungszwecke noch weiter zu optimieren.

Selbsthärtende Systeme bestehen aus einer oder mehreren Komponenten und enthalten u.a. reaktive Monomere, die durch verschiedene Starter/Aktivator-Systeme polymerisieren und damit härten. Bei Zweikomponentenmaterialien z.B. enthält die eine Komponente einen Aktivator, die zweite Komponente einen Starter, und beim Zusammengeben und Vermischen der beiden Komponenten polymerisieren die reaktiven Monomere und das System härtet aus. Als reaktive Monomere werden z.B. verschiedenartig strukturierte Acrylate bzw. Methacrylate eingesetzt, als Aktivatoren z.B. aromatische Amine wie N,N-Dimethyl-p-toluidin, und als Starter z.B. Dibenzoylperoxid (DBP). Hier handelt es sich dann um eine radikalische Polymerisation und Härtung. Es sind noch weitere Initiator/Aktivator-Systeme bekannt.

Als übliche Additive werden den selbsthärtenden Systemen z.B. Pigmente, Stabilisatoren, Weichmacher oder Schlagzähigkeitsverbesserer zugesetzt, sowie Füllstoffe der verschiedensten Art.

Ein entscheidender Nachteil der selbsthärtenden Systeme auf der Basis von Acrylaten oder Methacrylaten ist in den Methacrylat- und Acrylatmonomeren zu sehen. Vorallem niedermolekulare Acrylat- und Methacrylatmonomere verüben neben einer starken Geruchsbelästigung oft eine akute toxische Wirkung.

Ein weiterer großer Nachteil der selbsthärtenden Systeme nach dem Stand der Technik besteht darin, daß bei der Verwendung von Aminen als Aktivatoren diese nach der Härtung im System noch vorhanden und beweglich sind, was zu großen toxikologischen Problemen führt und insbesondere eine Anwendung der selbsthörtenden Systeme im medizinischen Bereich nahezu ausschließt.

Die Umsetzung von acrylfunktionellen Siloxan-Komponenten zu zweifach (anorganisch und organisch) vernetzten Polymeren ist aus der EP 451 709 A2 bekannt. Die US-Patentschrift 4,698,406 offenbart die Herstellung von vernetzten Organopolysiloxanen durch Michael-Additionsreaktionen von aminofunktionellen Organopolysiloxanen an acrylfunktionelle Organopolysiloxane, wobei die Organopolysiloxane keine hydrolysierbaren, einer anorganischen Kondensation zugänglichen Substituenten am Silicium aufweisen und sehr viel weniger Aminogruppen als Siliciumatome enthalten. Die EP 230 342 A3 realisiert den gleichen Reaktionstyp mit rein organischen Acrylverbindungen, und die US 4,579,782 offenbart die Umsetzung spezifischer organischer Amine mit aromatischen Bismaleimiden. Aufgrund der mannigfaltigen Einsatzmöglichkeiten von selbsthärtenden Systemen, verbunden mit den verschiedenartigsten Anforderungen an diese ist immer Raum für neue Entwicklungen.

Aufgabe der vorliegenden Erfindung ist es deshalb, weitere selbsthärtende Systeme zur Verfügung zu stellen. Diese Systeme sollen universell einsetzbar und leicht zu handhaben sein und sie sollen flexibel in der Verarbeitungs- bzw. Applikationszeit sein, d.h. einstellbare Härtungszeiten zwischen einer und ca. 30 Minuten aufweisen. So sollen z.B. selbsthärtende Systeme für Verklebungen schnell und solche für die Herstellung von Formkörpern langsam härten. Ferner sollen diese Systeme mit Additiven und Füllstoffen versehen werden können und sie sollen mit thermisch und/oder UV-härtbaren Systemen bzw. Komponenten in weiten Bereichen mischbar sein. Außerdem sollen diese Systeme in ein organisch-anorganisches Netzwerk eingebaut werden können, und die Bestandteile des Systems, insbesondere die reaktiven Monomere, sollen toxikologisch unbedenklich sein.

Eine weitere Aufgabe der vorliegenden Erfindung ist die Bereitstellung solcher selbsthärtenden Systeme, die mit toxikologisch unbedenklichen Aktivatoren härtbar sind, so daß ein Einsatz dieser Systeme im medizinischen Bereich möglich wird.

Diese Aufgabe wird durch kovalent-nucleophil selbsthärtende Systeme auf der Basis polymerisierbarer und hydrolytisch kondensierbarer und/oder hydrolytisch kondensierter Siliciumverbindungen gelöst. Die erfindungsgemäßen kovalent-nucleophil selbsthärtenden Systeme bestehen aus zwei Komponenten, aus einer Komponente 1 und einer Komponente 2, die gegebenenfalls übliche Additive und/oder Füllstoffe und gegebenenfalls weitere copolymerisierbare Monomere und/oder Oligomere und/ oder weitere hydrolytisch kondensierbare und/oder kondensierte Verbindungen des Siliciums und gegebenenfalls anderer Elemente aus der Gruppe Al, Ti, Zr, B, P, Sn, Pb, der Übergangsmetalle, der Lanthaniden und der Actiniden enthalten. Desweiteren enthält die Komponente 1 eine oder mehrere Siliciumverbindungen der Formel I, gegebenenfalls in (vor)kon-densierter Form,

{XₐR_{b}Si[R'A]_{(4-a-b)}}ₓB (I)

in der die Reste und Indices gleich oder verschieden sind und
- A: gleich O, S, PR", POR", NHC(O)O oder NHC(O)NR'' bedeutet, mit R" gleich Wasserstoff, Alkyl oder Aryl,
- B: ein geradkettiger oder verzweigter organischer Rest ist, der sich von einer Verbindung B' mit mindestens einer (für NHC(O)O oder NHC(O)NR'') bzw. mindestens zwei C=C-Doppelbindungen und 5 bis 50 Kohlenstoff-Atomen ableitet,
- R: gleich Alkyl, Alkenyl, Aryl, Alkylaryl oder Arylalkyl ist,
- R': gleich Alkylen, Arylen oder Alkylenarylen ist,
- X: gleich Wasserstoff, Halogen, Hydroxy, Alkoxy, Acyloxy, Alkylcarbonyl, Alkoxycarbonyl oder NR"₂ ist, mit R" gleich Wasserstoff, Alkyl oder Aryl,
- a: gleich 1, 2 oder 3,
- b: gleich 0, 1 oder 2, mit a+b gleich 1, 2 oder 3, und
- x: gleich einer ganzen Zahl, deren Maximalwert der Anzahl von Doppelbindungen in der Verbindung B' minus 1 entspricht, bzw. gleich der Anzahl von Doppelbindungen in der Verbindung B' ist, wenn A für NHC(O)O oder NHC(O)NR'' steht,
wobei die obigen Alkyl- bzw. Alkenyl-Reste gegebenenfalls substituierte geradkettige, verzweigte oder cyclische Reste mit 1 bzw. 2 bis 20 Kohlenstoff-Atomen sind, Aryl für gegebenenfalls substituiertes Phenyl, Naphthyl oder Biphenyl steht und sich die obigen Alkoxy-, Acyloxy-, Alkylcarbonyl-, Alkoxycarbonyl-, Alkylaryl-, Arylalkyl-, Arylen-, Alkylen- und Alkylenaryl-Reste von den oben definierten Alkylund Aryl-Resten ableiten.

Die Komponente 2 enthält eine oder mehrere Verbindungen der nachstehenden allgemeinen Formeln II und/oder III und/oder IV und/oder V und/oder VI und/oder von den Verbindungen der Formeln V und VI abgeleitete (Vor)Kondensate,

R"₂N-R³-NR"₂ (II)

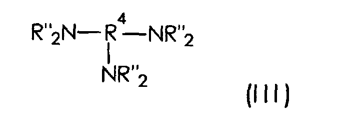

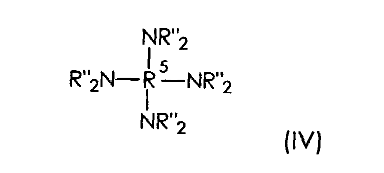

XₐSi(R'-NR"₂)₄₋ₐ (V)

XₐSi(R'-NR"-R'-NR"₂)₄₋ₐ (VI)

in denen die Reste R' und R" gleich oder verschieden sind, X, R', R" und a wie im Falle der allgemeinen Formel I definiert sind, R³, R⁴ und R⁵ einen gegebenenfalls substituierten Alkylen-, Arylen-, Arylenalkylen- oder Alkylenarylen-Rest mit 1 bis 20 Kohlenstoff-Atomen darstellen, der geradket-tig, verzweigt oder cyclisch ist, wobei Aryl für gegebenenfalls substituiertes Phenyl, Naphthyl oder Biphenyl steht, und in denen die Amino-Gruppen der Verbindungen mit den Formeln (II) bis (IV) an einem oder an mehreren verschiedenen Kohlenstoff-Atomen sitzen, wobei die Mehrzahl für Formel (II) zwei ist, für Formel (III) zwei oder drei ist und für Formel (IV) zwei, drei oder vier ist.

Überraschenderweise wurde festgestellt, daß sich die Silane der Formel I ganz hervorragend zum Einsatz als reaktive Monomere in kovalent-nucleophil selbsthörtenden Systemen eignen. Die C=C-Doppelbindungen der silangebundenen Reste B ermöglichen nach Zusatz von Verbindungen mit Aminogruppen über eine organische, ionische Polyaddition eine schnelle Härtung, wobei die Reaktionsgeschwindigkeit, d.h. die Härtungszeit, über die Reaktivität der C=C-Doppelbindung (Methacrylat ↔ Acrylat) und/oder über die Reaktivität der Amine, d.h. durch deren Substitution (z.B. primär ↔ sekundär, aliphatisch ↔ aromatisch), gesteuert werden kann. Desweiteren kann die Härtungszeit auch über die Anzahl der vernetzbaren Komponenten bzw. der vernetzbaren Gruppen, z.B. der Acrylatgruppen, und/oder über die Anzahl der Aminogruppen gesteuert werden. Somit ist es möglich, die erfindungsgemäßen Systeme sowohl für die Herstellung von Formkörpern einzusetzen, wo lange Härtungszeiten erwünscht sind, als auch für Verklebungen, wo eine schnelle Härtung gefordert wird. Damit bergen die erfindungsgemäßen Systeme ein reichhaltiges Variationspotential bzgl. ihrer Anwendung.

Ein weiterer Vorteil der erfindungsgemäßen Systeme besteht darin, daß die Silylalkoxygruppen der Silane der Formel I die Möglichkeit bieten, nach den Prinzipien des Sol-Gel-Verfahrens ein anorganisches Netzwerk aufzubauen, wobei in dieses Netzwerk weitere anorganisch vernetzende Komponenten eingebaut werden können, so daß dieses in weiten Bereichen variierbar ist und einfach und universell den Erfordernissen des jeweiligen Anwendungsfalles angepaßt werden kann.

Desweiteren besteht ein Vorteil der erfindungsgemäßen Systeme darin, daß über die Silylalkoxygruppen sowie über die C=C-Doppelbindungen der Silane der Formel I ein organisch-anorganisches Netzwerk aufgebaut wird, das ebenfalls in weiten Bereichen variierbar ist und ebenfalls einfach und universell den Erfordernissen des jeweiligen Anwendungsfalles angepaßt werden kann. So können z.B. weitere copolymerisierbare, selbsthärtende sowie thermisch und/oder UV-härtbare Monomere den erfindungsgemäßen Systemen zugesetzt werden, um damit deren chemische und physikalische Eigenschaften den Anforderungen des jeweiligen Anwendungsfalles anzupassen.

Mit den erfindungsgemäßen, kovalent-nucleophil selbsthärtenden Systemen werden Materialien zur Verfügung gestellt, die die Herstellung von anorganischorganischen Verbundpolymeren mit den unterschiedlichsten Eigenschaften ermöglichen. Diese unterschiedlichen Eigenschaften sind z.B. über die strukturellen Verhältnisse innerhalb der eingesetzten Silane der Formel I einstellbar, durch die strukturellen Verhältnisse innerhalb der eingesetzten Amine, sowie durch die strukturellen Verhältnisse der copolymerisierbaren Monomere bzw. der weiteren cohydrolysierbaren Komponenten.

Die erfindungsgemäßen, kovalent-nucleophil selbsthärtenden Systeme können entweder als solche oder in Form von Lösungen in der Verbindungstechnik (z.B. von optisch-elektronischen Bauteilen) als Kleber bzw. Haftvermittler für die verschiedensten Substrate eingesetzt werden, ferner zur Oberflächenversiegelung konventioneller Komposite, als Klebstoffe, Komposite, Bulkmaterialien, als Verguß-, Dichtungs- und Beschichtungsmassen oder in Formgebungsverfahren bzw. in der Abformtechnik (z.B. in der Replikatechnik). Desweiteren können die erfindungsgemäßen Systeme zur Herstellung von Fasern, Folien oder Füllstoffen eingesetzt werden. Ferner wird beim Einsatz von reaktiven Acrylat- bzw. Methacrylatgruppen eine schnelle und vollständige Härtung ermöglicht, wobei die Härtungszeiten über deren Anzahl und deren Reaktivität gesteuert werden kann. Desweiteren ist eine Kombination von Selbsthärtung mit z.B. photoinduzierter bzw. thermischer Härtung möglich.

Ein weiterer großer Vorteil der erfindungsgemäßen, selbsthärtenden Systeme gegenüber dem Stand der Technik besteht darin, daß polymerisierbare, toxische Monomeren, z.B. toxische Acrylate oder Methacrylate, fest an die Silane der Formel I gebunden und dadurch fest in das anorganisch-organische Netzwerk eingebettet sind, so daß selbst im Falle einer unvollständigen Polymerisation nach der Härtung keine freien Monomere vorliegen können. Bei den selbsthärtenden Systemen nach dem Stand der Technik auf der Basis von Acrylaten bzw. Methacrylaten besteht indes immer die Gefahr, daß nach der Härtung aufgrund einer unvollständigen Polymerisation noch freie Monomere vorliegen, die zu erheblichen toxischen Problemen führen können.

Deshalb besteht die Möglichkeit, die erfindungsgemäßen Systeme auch im medizinischen Bereich einzusetzen. Eine mögliche Anwendung ist z.B. die Ver wendung als Introkularlinsen-Füllmaterial bei der Bekämpfung von Katarakt und anderen Augenkrankheiten. Bezüglich näherer Einzelheiten hierzu wird auf die DE 3927667 A1 verwiesen.

Die Silane der Formel I sind über die Reste B polymerisierbar, bzw. addierbar, und über die Reste X hydrolysierbar. Über die hydrolysierbaren Gruppen kann ein anorganisches Netzwerk mit Si-O-Si-Einheiten aufgebaut werden, während die im Rest B enthaltenen Doppelbindungen unter Aufbau eines organischen Netzwerkes polymerisieren bzw. mit den Aminen der Komponente 2 eine Polyaddition eingehen.

Die Alkylreste sind z.B. geradkettige, verzweigte oder cyclische Reste mit 1 bis 20, insbesondere mit 1 bis 10 Kohlenstoffatomen und vorzugsweise niedere Alkylreste mit 1 bis 6, besonders bevorzugt mit 1 bis 4 Kohlenstoffatomen. Spezielle Beispiele sind Methyl, Ethyl, n-Propyl, i-Propyl, n-Butyl, i-Butyl, s-Butyl, t-Butyl, n-Pentyl, n-Hexyl, Cyclohexyl, 2-Ethylhexyl, Dodecyl und Octadecyl.

Die Alkenylreste sind z.B. geradkettige, verzweigte oder cyclische Reste mit 2 bis 20, bevorzugt mit 2 bis 10 Kohlenstoffatomen und vorzugsweise niedere Alkenylreste mit 2 bis 6 Kohlenstoffatomen, wie z.B. Vinyl, Allyl und 2-Butenyl.

Bevorzugte Arylreste sind Phenyl, Biphenyl und Naphthyl. Die Alkoxy-, Acyloxy-, Alkylamino-, Dialkylamino-, Alkylcarbonyl-, Alkoxycarbonyl-, Arylaklyl-, Alkylaryl-, Alkylen- und Alkylenarylenreste leiten sich vorzugsweise von den oben genannten Alkyl- und Arylresten ab. Spezielle Beispiele sind Methoxy, Ethoxy, n- und i-Propoxy, n-, i-, s- und t-Butoxy, Monomethylamino, Monoethylamino, Dimethylamino, Diethylamino, N-Ethylanilino, Acetyloxy, Propionyloxy, Methylcarbonyl, Ethylcarbonyl, Methoxycarbonyl, Ethoxycarbonyl, Benzyl, 2-Phenylethyl und Tolyl.

Die genannten Reste können gegebenenfalls einen oder mehrere Substituenten tragen, z.B. Halogen, Alkyl, Hydroxyalkyl, Alkoxy, Aryl, Aryloxy, Alkylcarbonyl, Alkoxycarbonyl, Furfuryl, Tetrahydrofurfuryl, Amino, Monoalkylamino, Dialkylamino, Trialkylammonium, Amido, Hydroxy, Formyl, Carboxy, Mercapto, Cyano, Isocyanato, Nitro, Epoxy, SO₃H oder PO₄H₂.

Unter den Halogenen sind Fluor, Chlor und Brom und insbesondere Chlor bevorzugt.

Für a ≥ 2 bzw. b=2 können die Reste X und R jeweils die selbe oder eine unterschiedliche Bedeutung haben.

In bevorzugten Ausführungsformen der erfindungsgemäßen, selbsthärtenden Systeme sind die Reste X, R, R', A, a, b, c und x in der allgemeinen Formel I wie folgt definiert:
- X :: (C₁-C₄)-Alkoxy, insbesondere Methoxy und Ethoxy; oder Halogen, insbesondere Chlor;
- R :: (C₁-C₄)-Alkyl, insbesondere Methyl und Ethyl;
- R':: (C₁-C₄)-Alkylen, insbesondere Methylen und Propylen;
- A:: O, S oder NHC(O)O, insbesondere S oder NHC(O)O;
- a:: 1, 2 oder 3;
- 4-a-b:: 1;
- x :: 1 oder 2.

Bei besonders bevorzugten Ausführungsformen der erfindungsgemäßen Systeme ist in der allgemeinen Formel I die Struktureinheit mit dem Index x ausgewählt aus Triethoxysilyl, Methyldiethoxysilyl, Methyldichlorsilyl, 3-Methyldimethoxysilyl-propylthio, 3-Triethoxysilyl-propylthio, Ethoxydimethylsilyl-methylthio, Methyldiethoxysilylmethlythio oder 3-Triethoxysilylpropylurethan.

Der Rest B in der allgemeinen Formel I leitet sich ab von einer substituierten oder unsubstituierten Verbindung B' mit mindestens einer bzw. mit mindestens zwei C=C-Doppelbindungen, z.B. mit Vinyl-, Allyl-, Acryl- und/oder Methacrylgruppen, und mit 5 bis 50, vorzugsweise mit 6 bis 30 Kohlenstoffatomen. Vorzugsweise leitet sich B ab von einer substituierten oder unsubstituierten Verbindung B' mit zwei oder mehreren Acrylat- und/oder Methacrylatgruppen. Derartige Verbindungen werden im folgenden als (Meth)Acrylate bezeichnet.

Falls die Verbindung B' substituiert ist, können die Substituenten unter den oben genannten Substituenten gewählt sein.

Bei weiteren bevorzugten Ausführungsformen der erfindungsgemäßen Systeme werden Silane der allgemeinen Formel I eingesetzt, in der sich B von Acrylsäureestern von Trimethylolpropan, Pentaerythrit, Dipentaerythrit, C₂-C₄-Alkandiolen, z.B. von Glycerin (z.B. Glycerindimethacrylat), Polyethylenglycolen, Polypropylenglycolen oder von gegebenenfalls substituiertem und/oder alkoxyliertem Bisphenol A ableitet.

Nähere Einzelheiten und konkrete Beispiele für Silane der allgemeinen Formel I sowie deren Herstellung sind der EP 0451709 A2 und der DE 4011044 C2 zu entnehmen.

Neben den Silanen der Formel I können noch weitere hydrolytisch kondensierbare Verbindungen des Siliciums oder anderer Elemente aus der Gruppe Al, Ti, Zr, B, P, Sn, Pb, der Übergangsmetalle, der Lanthaniden und der Actiniden, entweder als solche oder bereits in vorkondensierter Form, zur Herstellung der erfindungsgemäßen Systeme herangezogen werden.

Bevorzugt ist es, wenn mindestens 50 Mol-%, insbesondere mindestens 80 Mol-% und speziell mindestens 90 Mol-%, auf Basis monomerer Verbindungen, der zur Herstellung der erfindungsgemäßen Systeme herangezogenen Ausgangsmaterialien Siliciumverbindungen sind. Ebenso ist es bevorzugt, wenn den erfindungsgemäßen Systemen mindestens 10 Mol-%, z.B. 25 bis 100 Mol-%, insbesondere 50 bis 100 Mol-% und speziell 75 bis 100 Mol-%, jeweils auf Basis monomerer Verbindungen, an einem oder mehreren der Silane der allgemeinen Formel I zugrunde liegen.

Unter den von Silanen der allgemeinen Formel I verschiedenen hydrolytisch kondensierbaren Siliciumverbindungen, die gegebenenfalls eingesetzt werden können, sind solche der allgemeinen Formel VII bevorzugt,

Rₓ(R²Z)_{y}Si X_{4-(x+y)} (VII)

in der die Reste R, R² und Z gleich oder verschieden sind und folgende Bedeutung haben:
- R =: Alkyl, Alkenyl, Aryl, Alkylaryl oder Arylalkyl,
- R² =: Alkylen oder Alkenylen, wobei diese Reste durch Sauerstoff- oder Schwefelatome oder NH-Gruppen unterbrochen sein können,
- X =: Wasserstoff, Halogen, Hydroxy, Alkoxy, Acyloxy, Alkylcarbonyl, Alkoxycarbonyl oder NR''₂,
mit R'' = Wasserstoff, Alkyl oder Aryl,
- Z =: Halogen oder eine gegebenenfalls substituierte Amino-, Amid-, Aldehyd-, Alkylcarbonyl-, Carboxy-, Mercapto-, Cyano-, Alkoxy-, Alkoxycarbonyl-, Sulfonsäure-, Phosphorsäure-, Acryloxy-, Methacryloxy-, Epoxy- oder Vinylgruppe,
- x =: 0, 1, 2, oder 3,
- y =: 0, 1, 2, oder 3, mit x + y = 1, 2 oder 3.

Silane der allgemeinen Formel VII sind entweder im Handel erhältlich oder lassen sich nach bekannten Methoden herstellen; vgl.W.Noll, "Chemie und Technologie der Silicone", Verlag Chemie GmbH, Weinheim/ Bergstraße (1968). Im übrigen wird auf die deutschen Patente DE 4011044 C2 und DE 3407087 C2 verwiesen.

Die Alkylreste sind z.B. geradkettige, verzweigte oder cyclische Reste mit 1 bis 20, vorzugsweise mit 1 bis 10 Kohlenstoffatomen, und besonders bevorzugt sind niedere Alkylreste mit 1 bis 6 Kohlenstoffatomen. Spezielle Beispiele sind Methyl, Ethyl, n-Propyl, i-Propyl, n-Butyl, s-Butyl, t-Butyl, i-Butyl, n-Pentyl, n-Hexyl, Cyclohexyl, 2-Ethylhexyl, Dodecyl und Octadecyl.

Die Alkenylreste sind z.B. geradkettige, verzweigte oder cyclische Reste mit 2 bis 20, vorzugsweise mit 2 bis 10 Kohlenstoffatomen, und besonders bevorzugt sind niedere Alkenyl-reste mit 2 bis 6 Kohlenstoffatomen, wie z.B. Vinyl, Allyl oder 2-Butenyl.

Bevorzugte Arylreste sind Phenyl, Biphenyl und Naphthyl. Die Alkoxy-, Acyloxy-, Alkylcarbonyl-, Alkoxycarbonyl- und Aminoreste leiten sich vorzugsweise von den oben genannten Alkyl- und Arylresten ab. Spezielle Beispiele sind Methoxy, Ethoxy, n- und i-Propoxy, n-, i-, s- und t-Butoxy, Methylamino, Ethylamino, Dimethylamino, Diethylamino, N-Ethylanilino, Acetyloxy, Propionyloxy, Methylcarbonyl, Ethylcarbonyl, Methoxycarbonyl, Ethoxycarbonyl, Benzyl, 2-Phenylethyl und Tolyl.

Die genannten Reste können gegebenenfalls einen oder mehrere Substituenten tragen, z.B. Halogen, Alkyl, Hydroxyalkyl, Alkoxy, Aryl, Aryloxy, Alkylcarbonyl, Alkoxycarbonyl, Furfuryl, Tetrahydrofurfuryl, Amino, Alkylamino, Dialkylamino, Trialkylammonium, Amido, Hydroxy, Formyl, Carboxy, Mercapto, Cyano, Isocyanato, Nitro, Epoxy, SO₃H und PO₄H₂.

Unter den Halogenen sind Fluor, Chlor und Brom bevorzugt.
Spezielle Beispiele für hydrolytisch kondensierbare Silane der allgemeinen Formel VII sind:
CH₃-Si-Cl₃, CH₃-Si-(OC₂H₅)₃, C₂H₅-Si-Cl₃, C₂H₅-Si-(OC₂H₅)₃, CH₂=CH-Si-(OC₂H₅)₃, CH₂=CH-Si-(OC₂H₄OCH₃)₃, (CH₃)₂-Si-Cl₂, CH₂=CH-Si-(OOCCH₃)₃, (C₂H₅)₃-Si-Cl, (CH₃)₂-Si-(OC₂H₅)₂, (C₂H₅)₂-Si-(OC₂H₅)₂, (CH₃)₂(CH₂=CH)-Si-Cl₂, (CH₃)₃-Si-Cl, (t-C₄H₉)(CH₃)₂-Si-Cl, (CH₃O)₃-Si-C₃H₆-NH-C₂H₄-NH-C₂H₄-NH₂, (CH₃O)₃-Si-C₃H₆-SH, (CH₃O)₃-Si-C₃H₆-NH-C₂H₄-NH₂, (CH₃O)₃-Si-C₃H₆-Cl, (C₂H₅O)₃-Si-C₃H₆-NH₂, (CH₃O)₃-Si-C₃H₆-O-C(O)-C(CH₃)=CH, (CH₃)₂(CH₂=CH-CH₂)-Si-Cl,

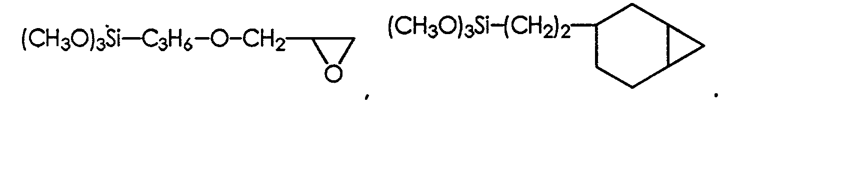

Desweiteren sind unter den von Silanen der allgemeinen Formel I verschiedenen hydrolytisch kondensierbaren Siliciumverbindungen, die gegebenenfalls eingesetzt werden können, solche der allgemeinen Formel VIII ebenfalls bevorzugt,

Yₙ Si Xₘ R₄₋₍ₙ₊ₘ₎ (VIII)

in der die Reste X, Y und R gleich oder verschieden sind und folgende Bedeutung haben:
- R =: Alkyl, Alkenyl, Aryl, Alkylaryl oder Arylalkyl,
- X =: Wasserstoff, Halogen, Hydroxy, Alkoxy, Acyloxy, Alkylcarbonyl, Alkoxycarbonyl oder NR''₂, mit R" = Wasserstoff, Alkyl oder Aryl,
- Y =: ein Substituent, der einen substituierten oder unsubstituierten 1,4,6-Trioxaspiro-[4,4]-nonan-Rest enthält,
- n =: 1, 2 oder 3,
- m =: 1, 2 oder 3, mit n+m ≤ 4.

Die Silane der allgemeinen Formel VIII sind ebenso wie die Silane der allgemeinen Formel I hydrolysierbar und polymerisierbar und können wie die Silane der Formel I in ein organisch-anorganisches Netzwerk eingebaut werden. Ferner sind Silane der allgemeinen Formel VIII stabile Verbindungen, die im basischen Milieu hydrolysier- und kondensierbar sind, ohne daß der Spirokomplex vorzeitig geöffnet wird. Ferner bieten sie den großen Vorteil, daß durch ihren Zusatz das Schrumpfverhalten der erfindungsgemäßen Systeme während der Härtung, d.h. während der Polymerisation so beeinflußt wird, daß keine oder nur eine geringe Schrumpfung auftritt und sogar eine Expansion möglich ist.

Die Reste X und R der allgemeinen Formel VIII sind wie in der allgemeinen Formel VII definiert. Nähere Einzelheiten und konkrete Beispiele für Silane der allgemeinen Formel VIII sowie deren Herstellung sind der DE 4125201 C1 zu entnehmen.

Unter den gegebenenfalls zur Herstellung der erfindungsgemäßen Systeme verwendeten hydrolysierbaren Aluminiumverbindungen sind diejenigen besonders bevorzugt, die die allgemeine Formel IX aufweisen,

AlR°₃ (IX)

in der die Reste R°, die gleich oder verschieden sind, ausgewählt sind aus Halogen, Alkoxy, Alkoxycarbonyl und Hydroxy. Hinsichtlich der näheren (bevorzugten) Definitionen dieser Reste kann auf die Ausführungen im Zusammenhang mit den geeigneten hydrolysierbaren Siliciumverbindungen verwiesen werden. Die soeben genannten Gruppen können auch ganz oder teilweise durch Chelatliganden (z.B. Acetylaceton oder Acetessigsäureester, Essigsäure) ersetzt sein.

Besonders bevorzugte Aluminiumverbindungen sind Aluminiumalkoxide und - halogenide. In diesem Zusammenhang können als konkrete Beispiele Al(OCH₃)₃, Al(OC₂H₅)₃, Al(O-n-C₃H₇)₃, Al(O-i-C₃H₇)₃, Al(OC₄H₉)₃, Al(O-i-C₄H₉)₃, Al(O-s-C₄H₉)₃, AlCl₃ und AlCl(OH)₂ genannt werden. Bei Raumtemperatur flüssige Verbindungen, wie z.B. Aluminium-sek-butylat und Aluminium-isopropylat, werden besonders bevorzugt.

Geeignete hydrolysierbare Titan- und Zirkoniumverbindungen, die erfindungsgemäß eingesetzt werden können, sind solche der allgemeinen Formel X,

M Xₖ Rₗ (X)

in der M Titan oder Zirkonium bedeutet, die Reste R und X gleich oder verschieden und wie im Falle der allgemeinen Formel I definiert sind. Dies gilt auch für die bevorzugten Bedeutungen. k stellt eine ganze Zahl von 1 bis 4 dar, insbesondere 2 bis 4, und l steht für 0, 1, 2 oder 3, vorzugsweise für 0, 1 oder 2. Besonders bevorzugt handelt es sich bei den Verbindungen der Formel X um solche, in denen k gleich 4 ist.

Wie im Falle der obigen Al-Verbindungen können auch komplexierte Ti- oder Zr-Verbindungen eingesetzt werden. Zusätzliche bevorzugte Komplexbildner sind hier Acrylsäure und Methacrylsäure.

Konkrete Beispiele für einsetzbare Zr- und Ti-Verbindungen sind TiCl₄, Ti(OC₂H₅)₄, Ti(OC₃H₇)₄, Ti(O-i-C₃H₇)₄, Ti(OC₄H₉)₄, Ti(2-ethylhexoxy)₄, ZrCl₄, Zr(OC₂H₅)₄, Zr(OC₃H₇)₄, Zr(O-i-C₃H₇)₄, Zr(OC₄H₉)₄, Zr(2-ethylhexoxy)₄ und ZrOCl₂.

Weitere hydrolysierbare Verbindungen, die zur Herstellung der erfindungsgemäßen Systeme eingesetzt werden können, sind z.B. Bortrihalogenide und Borsäureester, wie z.B. BCl₃, B(OCH₃)₃ und B(OC₂H₅)₃, Zinntetrahalogenide und Zinntetraalkoxide, wie z.B. SnCl₄ und Sn(OCH₃)₄, und Vanadylverbindungen, wie z.B. VOCl₃ und VO(OCH₃)₃.

Durch den erfindungsgemäßen Einsatz von von Siliciumverbindungen verschiedenen hydrolysierbaren Verbindungen ist es möglich, Heteroatome in das anorganische Netzwerk einzubauen und damit die Egenschaften der erfindungsgemäßen Systeme den Anforderungen des jeweiligen Anwendungsfalles anzupassen, z.B. bzgl. der Röntgenopazität, der thermischen Ausdehnung etc..

Die Komponente 2 der erfindungsgemäßen Systeme enthält eine oder mehrere Verbindungen mit einer oder mehreren substituierten oder unsubstituierten Aminogruppen. Nach Vermischen der beiden Komponenten 1 und 2 wird die Härtung der erfindungsgemäßen Systeme durch einen organisch-ionischen Polyadditionsschritt eingeleitet, wobei die Aminogruppen an die C=C-Doppelbindungen der Reste B der Silane der allgemeinen Formel I addiert werden.

Enthält die Komponente 2 nur Verbindungen mit jeweils einer Aminogruppe, so handelt es sich hier, um eine Vernetzung zu gewährleisten, um primäre Aminogruppen. Es erfolgt eine Zweifachaddition an die C=C-Doppelbindungen, woraus eine sehr kurze Verbindungskette (1 Atom) resultiert. In allen anderen Fällen liegen neben primären auch sekundäre Aminogruppen vor. Am Beispiel eines (Meth)acrylats (Komponente 1) und eines Diamins (Komponente 2) wird der Reaktionsmechanismus zur Selbsthärtung, d.h. zur Erreichung eines ionisch vemetzten Polymers, näher erläutert.

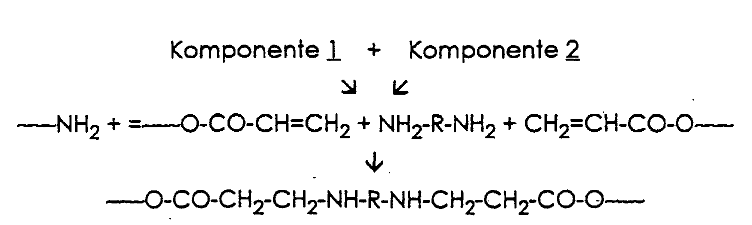

In einer ersten Ausführungsform enthält die Komponente 2 eine oder mehrere Verbindungen mit mindestens zwei substituierten und/oder unsubstituierten Aminogruppen. Solche Verbindungen fallen z.B. unter die allgemeinen Formel (II),

R"₂N-R³-NR"₂ (II)

in der die Reste R'' gleich oder verschieden sind und Wasserstoff, Alkyl oder Aryl bedeuten, R³ einen gegebenenfalls substituierten Alkylen-, Arylen-, Arylenalkylen- oder Alkylenarylenrest mit 1 bis 20 Kohlenstoffatomen darstellt, der geradkettig, verzweigt oder cyclisch ist, wobei Aryl für gegebenenfalls substituiertes Phenyl, Naphthyl oder Biphenyl steht, und in der die Aminogruppen an einem oder an verschiedenen Kohlenstoffatomen sitzen.

Ohne Einschränkung der Allgemeinheit sind konkrete Beispiele für Diamine der Formel II: Diaminoaceton, Diaminoacridin, Diaminoadamantan, Diaminoanthrachinon, Benzidin, Diaminobenzoesäure, Phenylendiamin, Diaminobenzophenon, Diaminobutan, Diaminocyclohexan, Diaminodecan, Diaminodicyclohexylmethan, Diaminodimethoxybiphenyl, Diaminodimethylhexan, Diaminodimethylpropan, Diaminodiphenylmethan, Diaminododecan, Diaminoheptan, Diaminohexan, Diaminomenthan, Diaminomesitylen, Diaminomethylpentan, Diaminomethylpropan, Naphthylendiamin, Diaminoneopentan, Diaminononan, Diaminooctan, Diaminopentan, Diaminophenanthren, Diaminopropan, Diaminopropanol, Diaminopurin, Diaminopyridin und Diaminopyrimidin.

In Abhängigkeit von der Konstitution der Reste R₃ werden Polymere mit den unterschiedlichsten Eigenschaften gebildet. So führen z.B. aliphatische Verbindungseinheiten, wie etwa in NH₂-CH₂-CH₂-NH₂ oder NH₂-(CH₂)₃-NH₂, bis hin zu NH₂-(CH₂)₁₂-NH₂ zu Copolymeren, die mit steigender Länge der Verbindungseinheit eine zunehmende Flexibilität (d.h. sinkendes E-Modul) aufweisen. Steifere Verbindungseinheiten, wie z.B. in NH₂-C₆H₄-NH₂, NH₂-C₆H₄-O-C₆H₄-NH₂, NH₂-C₆H₄-C(CH₃)₂-C₆H₄-NH₂ oder NH₂-C₆H₄-SO₂-C₆H₄-NH₂ resultieren in Copolymeren mit höherer Steifigkeit.

In weiteren Ausführungsformen enthält die Komponente 2 der erfindungsgemäßen Systeme eines oder mehrere Triamine der allgemeinen Formel III, 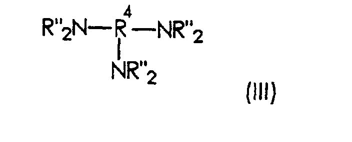 in der die Reste R" gleich oder verschieden sind und Wasserstoff, Alkyl oder Aryl bedeuten, R⁴ einen gegebenenfalls sub-stituierten Alkylen-, Arylen-, Arylenalkylen.- oder Alkylenarylenrest mit 1 bis 20 Kohlenstoffatomen darstellt, der geradkettig, verzweigt oder cyclisch ist, wobei Aryl für gegebenenfalls substituiertes Phenyl, Naphthyl oder Biphenyl steht, und in der die Aminogruppen an drei, an zwei oder an einem Kohlenstoffatom sitzen,
und/oder eines oder mehrere Tetraamine der allgemeinen Formel IV, 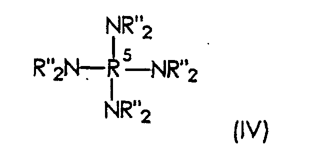 in der die Reste R'' gleich oder verschieden sind und Wasserstoff, Alkyl oder Aryl bedeuten, R⁵ einen gegebenenfalls sub-stituierten Alkylen-, Arylen-, Arylenalkylen- oder Alkylenarylenrest mit 1 bis 20 Kohlenstoffatomen darstellt, der geradkettig, verzweigt oder cyclisch ist, wobei Aryl für gegebenenfalls substituiertes Phenyl, Naphthyl oder Biphenyl steht, und in der die Aminogruppen an vier, an drei oder an zwei verschiedenen Kohlenstoffatomen sitzen.

Amine der Formel III und IV stellen eine dreidimensionale, stark vernetzende Verbindungseinheit dar und führen zu Copolymeren mit höherer Vernetzungsdichte und damit höherer Steifigkeit und Härte

In weiteren Ausführungsformen der erfindungsgemäßen Systeme enthält die Komponente 2 als Aminogruppen haltige Verbindung(en) Silane der allgemeinen Formel V und/oder VI.

Xₐ Si (R'-NR"₂)₄₋ₐ (V)

Xₐ Si (R'-NR"-R'-NR"₂)₄₋ₐ (VI)

in der jeweils die Reste X, R' und R'' gleich oder verschieden und wie in Formel I definiert sind, mit a gleich 1, 2 oder 3.

Die Aufgabe des Bereitstellens selbsthärtender Systeme, die toxikologisch unbedenklich sind, wird durch die Kombination von Silanen der allgemeinen Formel I mit silangebundenen Aminen der allgemeinen Formel V oder VI gelöst. Ohne Einschränkung der Allgemeinheit sind konkrete Beispiele für diese Amine :

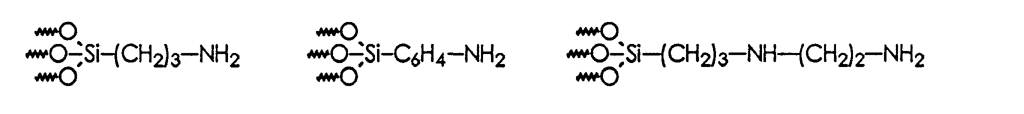

Ferner 4-Aminobutyldimethylmethoxysilan, 4-Aminobutyltrieth-oxysilan, (Aminoethylaminomethyl)phenylethyltrimethoxysilan, N-(2-Aminoethyl)-3-aminopropylmethyldimethoxysilan, N-(2-Ami-noethyl-3-aminopropyl)trimethoxysilan, N-2-Aminoethyl-3-aminopropyltris(2-ethylhexoxy)silan, 6-(Aminohexylaminopropyl)-trimethoxysilan, Aminomethyltrimethylsilan, Aminophenyltrimethoxysilan, 3-(1-Aminopropoxy)-3,3-dimethyl-1-propenyltrimethoxysilan, 3-Aminopropyldiethylmethylsilan, 3-Aminopropyl-tris(methoxyethoxyethoxy)silan, 3-Aminopropyldimethylethoxysilan, 3-Aminopropylmethyldiethoxysilan, 3-Aminopropyltriethoxysilan, 3-Aminopropyltrimethoxysilan, 3-Aminopropyltris-(trimethylsiloxy)silan und ω-Aminoundecyltrimethoxysilan,

Überraschenderweise wurde festgestellt, daß Amine der allgemeinen Formel V oder VI ebenfalls eingesetzt werden können und zur Selbsthärtung der erfindungsgemäßen Systeme führen. Der Einsatz dieser Amine bietet den großen Vorteil, daß die Aminkomponente über den Silananteil während der Hydrolyse und der Kondensation in das anorganische Netzwerk eingebaut und dort fest verankert wird. Damit liegen nach der Härtung keine freien Amine vor und es treten diesbezüglich keine toxikologischen Probleme auf. Damit sind die erfindungsgemäßen Systeme unter Verwendung von Aminen der Formel V oder VI insbesondere zum Einsatz im medizinischen Bereich geeignet.

Bei der Verwendung von Aminen der Formel V oder VI besteht der große Vorteil der erfindungsgemäßen Systeme darin, daß sowohl die Aminosilane als auch die reaktiven Monomere der Formel I nach der Härtung fest im anorganisch-organischen Netzwerk verankert, d.h. chemisch gebunden sind, also nicht mehr frei vorliegen und somit toxikologisch unbedenklich sind. Die Kombination von reaktiven Monomeren der Formel I mit Aminosilanen der Formel V oder VI bietet also gegenüber dem Stand der Technik ganz erhebliche toxikologische Vorteile.

Farbstoffe, UV-Absorber, Biomoleküle, Füllstoffe oder andere Additive können durch einfaches Zumischen zu den Komponenten 1 und/oder 2 in die erfindungsgemäßen Systeme eingebracht werden. Es ist aber auch möglich, diese Additive kovalent an das Amin der Komponente 2 zu binden und auf diese Art und Weise in das erfindungsgemäße System einzuführen. Dabei kann entweder das Amin der Komponente 2 in der eben geschilderten Weise modifiziert sein oder aber die Komponente 2 enthält zusätzlich noch modifiziertes Amin. Neben einer Funktionalisierung innerhalb der Vemetzungskomponente (d.h. des vernetzenden Amins) besteht also auch die Möglichkeit, durch einen nicht vernetzenden, d.h. nicht härtend wirkenden Bestandteil der Komponente 1 und/oder 2, z.B. über ein Monoamin, zusätzliche funktionelle Gruppen in das System zu bringen. Beispiele für funktionalisierte, vernetzende Amine sind zur n_{D}-Steigerung C₆H₅-NH₂ oder C₆H₅-S-C₆H₄-NH₂.

In analoger Weise ist es möglich, Funktionalität über funktionalisierte (Meth)acrylate in die erfindungsgemäßen Systeme einzubringen.

Damit steht ein reichhaltiges Potential zur Verfügung, die verschiedensten kovalent-nucleophil selbsthärtenden Systeme bereitzustellen, sowie ihr Eigenschaftsprofil in weiten Bereichen zu variieren. So läßt sich z.B. die Vernetzungsdichte über die Komponente 1 (z.B. über die Anzahl der (Meth)Acrylatgruppen) und/oder über die Komponente 2 (z.B. über die Anzahl der Aminogruppen) einstellen, um damit z.B. die mechanischen Eigenschaften der gehärteten, erfindungsgemäßen Systeme den Anforderungen des jeweilgen Anwendungsfalles anzupassen. Desweiteren lassen sich über in den Komponenten 1 und/oder 2 enthaltene funktionelle Gruppen die verschiedensten Funktionalitäten (z.B. UV-absorbierend, farbig, n_{D}-steigernd/senkend etc.) in die erfindungsgemäßen Systeme einbauen. Ferner steht über die Struktur des vernetzenden Amins (Kettenlänge, starr, flexibel, etc.) ein weiteres Instrument zur Verfügung, um die Eigenschaften der erfindungsgemäßen Systeme in der gewünschten Weise zu beeinflussen. Auch läßt sich die Reaktionsgeschwindigkeit bzgl. der Addition und damit bzgl. der Härtung in weiten Bereichen variieren. So reagieren z.B. primäre Aminogruppen mit Acrylatgruppen spontan und heftig beim Zusammengeben, während sekundäre Aminogruppen mit Methacrylaten bei Raumtemperatur nur sehr langsam bzw. erst bei höheren Temperaturen reagieren. Somit ist eine Anpassung an verschiedene Verarbeitungsverfahren möglich.

Desweiteren können eine oder beide Komponenten der erfindungsgemäßen, kovalent-nucleophil selbsthärtenden Systeme thermisch und/oder strahlungsinduziert copolymerisierbare Monomere enthalten. Besonders bevorzugt sind Spiroorthoester, Spiroorthocarbonate, bicyclische Spiroorthoester, Mono- oder Oligoepoxide, Epoxysilane oder Vinylether.

Ferner ist es möglich, einer oder beiden Komponenten der erfindungsgemäßen Systeme selbsthärtend copolymerisierbare Monomere zuzusetzen.

Die Silane der allgemeinen Formel I werden entweder alleine oder zusammen mit anderen hydrolytisch kondensierbaren und gegebenenfalls polymerisierbaren Komponenten durch hydrolytische Kondensation zu den erfindungsgemäßen, kovalent-nucleophil selbsthärtenden Systemen verarbeitet, deren endgültige Härtung dann durch eine organisch-ionische Polyaddition der Aminogruppen der Komponente 2 an die reaktiven C=C-Doppelbindungen der Reste B der Komponente 1 erfolgt, und gegebenenfalls durch Polymerisation von polymerisierbaren Gruppen, wobei im Fall der Silane der allgemeinen Formel I diese Polymerisation über eine Verknüpfung der C=C-Doppelbindungen der Reste B verläuft und im Falle der Spirosilane der allgemeinen Formel VIII über eine Ringöffnung der 1.4.6-Trioxa-spiro-[4.4]-nonan-Gruppen.

Die Silane der allgemeinen Formeln I, VII (die auch polymerisierbare Gruppen enthalten können, wie z.B. C=C- oder Epoxygruppen) und VIII, sowie z.B. Titan-, Zirkonium- und Aluminiumverbindungen der allgemeinen Formeln IX und X enthalten hydrolysierbare Gruppen X bzw. R°, z.B. Alkoxygruppen, durch die bei der hydrolytischen Kondensation ein anorganisches Netzwerk aufgebaut wird, während die im Rest B enthaltenen C=C-Doppelbindungen bzw. die im Rest Y enthaltenen Spirogruppen bei der Polymerisation bzw. Polyaddition ein organisches Netzwerk bilden. Das anorganische Netzwerk kann durch den Zusatz weiterer hydrolytisch kondensierbarer Verbindungen zusätzlich modifiziert werden und das organische Netzwerk durch Zugabe weiterer copolymersierbarer Verbindungen. Die gehärteten erfindungsgemäßen Systeme bilden somit eine anorganisch-organische Matrix, in die bei Bedarf weitere Komponenten, wie z.B. Füllstoffe oder Pigmente, eingebaut sein können.

Zum Aufbau des anorganischen Netzwerkes bzw. zur Herstellung der erfindungsgemäßen, kovalent-nucleophil selbsthärtenden Systeme werden die Silane der allgemeinen Formel I, gegebenenfalls unter Zusatz der Silane der Formel VII und/oder VIII sowie anderer cokondensierbarer Komponenten und gegebenenfalls in Anwesenheit eines Katalysators und/oder eines Lösungsmittels durch Einwirken von Wasser oder Feuchtigkeit hydrolysiert und polykondensiert. Diese Polykondensation erfolgt vorzugsweise nach dem Sol-Gel-Verfahren, wie es z.B. in den Offenlegungsschriften DE 2758414, 2758415, 3011761, 3826715 und 3835968 beschrieben ist, und sie erfolgt bei Anwesenheit von Spiroverbindungen (Silane der allgemeinen Formel VIII, copolymerisierbare Spiroorthoester, Spiroorthocarbonate, bicyclische Spiroorthoester oder Methacryloyl-Spiroorthoester) vorzugsweise im basischen Milieu, anderenfalls kann sie auch im sauren Milieu durchgeführt werden.

Die Herstellung der erfindungsgemäßen, kovalent-nucleophil selbsthärtenden Systeme kann in der auf dem Gebiet der Poly(hetero)kondensate üblichen Art und Weise erfolgen. Werden praktisch ausschließlich Siliciumverbindungen eingesetzt, kann die hydrolytische Kondensation in den meisten Fällen dadurch erfolgen, daß man den zu hydrolysierenden Siliciumverbindungen, die entweder als solche oder gelöst in einem geeigneten Lösungsmittel vorliegen, das erforderliche Wasser bei Raumtemperatur oder unter leichter Kühlung direkt zugibt (vorzugsweise unter Rühren und in Anwesenheit eines Hydrolyse- und Kondensationskatalysators) und die resultierende Mischung daraufhin einige Zeit (ein bis mehrere Stunden) rührt.

Bei Anwesenheit reaktiver Verbindungen des Al, Ti oder Zr, die auch in komplexierter Form vorliegen können, empfielt sich in der Regel eine stufenweise Zugabe des Wassers. Unabhängig von der Reaktivität der anwesenden Verbindungen erfolgt die Hydrolyse in der Regel bei Temperaturen zwischen -20 und 130 °C, vorzugsweise zwischen 0 und 30 °C bzw. dem Siedepunkt des gegebenenfalls eingesetzten Lösungsmittels. Wie bereits angedeutet, hängt die beste Art und Weise der Zugabe von Wasser vor allem von der Reaktivität der eingesetzten Ausgangsverbindungen ab. So kann man z.B. die gelösten Ausgangsverbindungen langsam zu einem Überschuß an Wasser tropfen oder man gibt Wasser in einer Portion oder portionsweise den gegebenenfalls gelösten Ausgangsverbindungen zu. Es kann auch nützlich sein, das Wasser nicht als solches zuzugeben, sondern es mit Hilfe von wasserhaltigen organischen oder anorganischen Systemen in das Reaktionssystem einzutragen. Als besonders geeignet hat sich in vielen Fällen die Eintragung der Wassermenge in das Reaktionsgemisch mit Hilfe von feuchtigkeitsbeladenen Adsorbentien, z.B. von Molekularsieben, und von wasserhaltigen, organischen Lösungsmitteln, z.B. von 80 %-igem Ethanol, erwiesen. Die Wasserzugabe kann aber auch über eine chemische Reaktion erfolgen, bei der Wasser im Laufe der Reaktion freigesetzt wird. Beispiele hierfür sind Veresterungen.

Wenn ein Lösungsmittel verwendet wird, kommen neben den niederen aliphatischen Alkoholen (z.B. Ethanol oder i-Propanol) auch Ketone, vorzugsweise niedere Dialkylketone, wie Aceton oder Methylisobutylketon, Ether, vorzugsweise niedere Dialkylether wie Diethylether oder Dibutylether, THF, Amide, Ester, insbesondere Essigsäureethylether, Dimethylformamid, Amine, insbesondere Triethylamin, und deren Gemische in Frage.

Werden zur Herstellung der erfindungsgemäßen, kovalent-nucleophil selbsthärtenden Systeme Spirosilane der allgemeinen Formel VIII eingesetzt, so wird die Hydrolyse bevorzugt in einem bzgl. dieser Silane basischen Milieu durchgeführt. Dies wird entweder durch ein basisches Lösungsmittel, wie z.B. durch Triethylamin, erzeugt, oder durch Zugabe von basischen Hydrolyse- und Kondensationskatalysatoren, wie z.B. von NH₃, NaOH, KOH, Methylimidazol, etc.

Die Ausgangsverbindungen müssen nicht notwendigerweise bereits alle zu Beginn der Hydrolyse (Polykondensation) vorhanden sein, sondern in bestimmten Fällen kann es sich sogar als vorteilhaft erweisen, wenn nur ein Teil dieser Verbindungen zunächst mit Wasser in Kontakt gebracht wird und später die restlichen Verbindungen zugegeben werden.

Um insbesondere bei Verwendung von von Siliciumverbindungen verschiedenen hydrolysierbaren Verbindungen Ausfällungen während der Hydrolyse und der Polykondensation so weit wie möglich zu vermeiden, kann die Wasserzugabe in mehreren Stufen, z.B. in drei Stufen, durchgeführt werden. Dabei kann in der ersten Stufe z.B. ein Zehntel bis ein Zwangzigstel der zur Hydrolyse benötigten Wassermenge zugegeben werden. Nach kurzem Rühren kann die Zugabe von einem Fünftel bis zu einem Zehntel der erforderlichen Wassermenge erfolgen und nach weiterem kurzen Rühren kann schließlich der Rest zugegeben werden.

Die Kondensationszeit richtet sich nach den jeweiligen Ausgangskomponenten und deren Mengenanteilen, dem gegebenfalls verwendeten Katalysator, der Reaktionstemperatur, etc. Im allgemeinen erfolgt die Polykondensation bei Normaldruck, sie kann jedoch auch bei erhöhtem oder bei verringertem Druck durchgeführt werden.

Das so erhaltene Polykondensat ist lagerstabil und kann entweder als solches oder nach teilweiser oder nahezu vollständiger Entfernung des verwendeten Lösungsmittels bzw. des während der Reaktion gebildeten Lösungsmittels als Komponente 1 in den erfindungsgemäßen Systemen eingesetzt werden. In einigen Fällen kann es sich als vorteilhaft erweisen, in dem nach der Polykondensation erhaltenen Produkt das überschüssige Wasser und das gebildete und gegebenenfalls zusätzlich eingesetzte Lösungsmittel durch ein anderes Lösungsmittel zu ersetzen, um das Polykondensat zu stabilisieren. Zu diesem Zweck kann die Reaktionsmischung z.B. im Vakuum bei leicht erhöhter Temperatur (bis maximal 80 °C) so weit eingedickt werden, daß sie noch problemlos mit einem anderen Lösungsmittel aufgenommen werden kann.

Zum Aufbau des organischen Netzwerkes bzw. zur Härtung der erfindungsgemä-Ben Systeme wird das Polykondensat, gegebenenfalls nach Zusatz anderer copolymerisierbarer Verbindungen, sowie von Füllstoffen und anderen Additiven einer Polyaddition und gegebenenfalls einer Polymerisation unterworfen, wobei neben der Selbsthärtung (Polyaddition) bei Zusatz entsprechender Monomere zusätzlich auch eine thermische und/oder eine strahlungsinduzierte Härtung durchgeführt werden kann. Die endgültige Härtung der erfindungsgemäßen Systeme erfolgt durch Vermischen der beiden Komponenten 1 und 2. Dabei werden im Zuge einer organisch-ionischen Polyaddition die Aminogruppen der Komponente 2 mit den C=C-Doppelbindungen der Silane der Formel I verknüpft und bei Anwesenheit von Silanen der allgemeinen Formel VIII im Zuge einer kationischen Polymerisation die Ringe der Spirogruppen geöffnet.

Es ist auch möglich, den erfindungsgemäßen Systemen vor der endgültigen Härtung, also vor der Polyaddition, weitere ionisch und/oder radikalisch polymerisierbare Verbindungen zuzusetzen. Radikalisch polymerisierbare Monomere, die zugesetzt werden können, sind z.B. solche mit C=C-Doppelbindungen, wie etwa Acrylate oder Methacrylate, wobei die Polymerisation über die C=C-Doppelbindungen erfolgt. Ionisch polymerisierbare Verbindungen, die zugesetzt werden können, enthalten z.B. Ringsysteme, die kationisch, ringöffnend polymerisierbar sind, wie etwa Spiroorthoester, Spiroorthocarbonate, bicyclische Spiroorthoester, Mono- oder Oligoepoxide. Es können aber auch Verbindungen zugesetzt werden, die sowohl kationisch als auch radikalisch polymerisierbar sind, wie z.B. Methacryloyl-Spiroorthoester. Diese sind radikalisch über die C=C-Doppelbindung und kationisch unter Ringöffnung polymerisierbar. Diese Systeme sind z.B. im Journal f. prakt. Chemie, Band 330, Heft2, 1988, S. 316-318, oder im Journal of Polymer Science: Part C: Polymer Letters, Vol. 26, S. 517-520 (1988) beschrieben.

Erfolgt neben der Selbsthärtung der erfindungsgemäßen Systeme auch eine photochemische Härtung, so werden mindestens einer der beiden Komponenten der erfindungsgemäßen Systeme übliche kationische Photoinitiatoren zugesetzt. Geeignete Photoinitiatoren nach dem Stand der Technik sind z.B. Verbindungen, die bei Bestrahlung Säuren freisetzen, wie etwa C₆H₅-N₂BF₄, o-NO₂-C₆H₄-CH₂-O-SO₂CF₃ oder Triarylsulfoniumsalze der nachfolgenden allgemeinen Formeln, in denen die Reste Ar gleich oder verschieden sein können und Aryl bzw. Arylen, z.B. Phenyl und Phenylen, bedeuten, mit X⁻ = BF₄⁻, AsF₆⁻, PF₆⁻ oder SbF₆⁻.

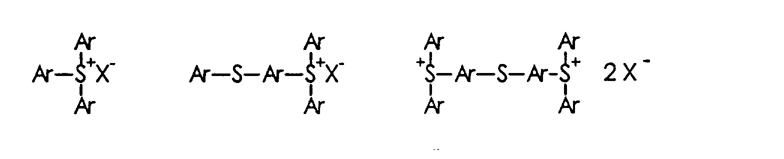

Diese Photoinotiatoren sind kommerziell erwerbbar. Z.B. von Union Carbide das Triphenylsulfoniumhexafluorophosphat als 50 %-ige Lösung in Propylencarbonat unter dem Handelsnamen UVI-6990, oder von der Firma Degussa Kl-85 (Initiator gemäß der letzten Formel mit Ar = Phenyl bzw. Phenylen und X⁻ = PF₆⁻ als 50 %-ige Lösung in Propylencarbonat). Prinzipiell sind alle Photoinitiatoren geeignet, die für die Polymerisation von Oxiran-haltigen Molekülen, wie z.B. cycloaliphatischen Epoxiden, eingesetzt werden.

Unter dem Einfluß der Bestrahlung wird das Triarylsulfonium-salz einer Photolyse unterzogen und es entsteht eine Broenstedsäure, welche die Ringöffnung der Spirogruppen katalysiert, wobei die Masse polymerisiert.

Erfolgt neben der Selbsthärtung auch eine thermische Härtung der erfindungsgemäßen Systeme, so werden mindestens einer Komponente des erfindungsgemäßen Systems thermische Initiatoren zugesetzt. Geeignete thermische Initiatoren sind z.B. BF₃ als BF₃·H₂NC₂H₅, ZnCl₂, TiCl₄ oder SnCl₂. Auch hier können alle die thermischen Initiatoren eingesetzt werden, die für die Polymerisation von Epoxidgruppen geeignet sind.

Die Initiatoren werden in üblichen Mengen zugegeben.

Als Photoinitiatoren können z.B. die im Handel erhältlichen eingesetzt werden. Beispiel hierfür sind Irgacure 184 (1-Hydroxycyclohexylphenylketon), Irgacure 500 (1-Hydroxycyclohexylphenylketon/Benzophenon), und andere von der Firma Ciba-Geigy erhältliche Photoinitiatoren vom Irgacure-Typ; Darocure 1173, 1116, 1398, 1174 und 1020 (erhältlich von der Firma Merck), Benzophenon, 2-Chlorthioxanthon, 2-Methylthioxanthon, 2-Isopropylthioxanthon, Benzoin, 4.4'-Dimethoxybenzoin, Campherchinon und andere.

Als thermische Initiatoren kommen insbesondere organische Peroxide in Form von Diacylperoxiden, Peroxydicarbonaten, Alkylperestern, Dialkylperoxiden, Perketalen, Ketonperoxiden und Alkylhydroperoxiden in Frage. Konkrete und bevorzugte Beispiele für thermische Initiatoren sind Dibenzoylperoxid, t-Butylperbenzoat und Azobisisobutyronitril.

Das anorganische Netzwerk ist dafür verantwortlich, daß die gehärteten, erfindungsgemäßen Systeme bereits ganz ohne Zusatz von Füllstoffen über eine ausgezeichnete Abrasionsfestigkeit und Formstabilität verfügen, und die Ausbildung des organischen Netzwerkes bewirkt eine geringe oder sogar negative Volumenschrumpfung. Bei Zusatz von Silanen der allgemeinen Formel VIII kann durch die Anzahl der Spirogruppen in den erfindungsgemäßen Systemen, d.h. durch die Art und/oder durch die Menge der eingesetzten Spirosilane der allgemeinen Formel VIII, die Volumenänderung während der Härtung den Anforderungen des jeweiligen Anwendungsfalles angepaßt werden. Je höher die Anzahl der Spirogruppen ist, desto geringer ist die Volumenschrumpfung. Ja es ist sogar möglich, die Volumenänderung bei der Härtung so zu beeinflussen, daß eine Volumenzunahme resultiert.

Die erfindungsgemäßen, kovalent-nucleophil selbsthärtenden Systeme können entweder als solche oder zusammen mit üblichen Zusatzstoffen, wie z.B. Füllstoffen (Filler), Haftvermittlern oder Pigmenten verarbeitet werden. Dabei werden die vorteilhaften Eigenschaften der gehärteten, erfindungsgemäßen Systeme durch Zusatz von Füllstoffen noch weiter verbessert, sodaß daraus Materialien resultieren, deren Eigenschaftsprofil gegenüber dem Stand der Technik ganz erheblich verbessert ist, und die allen Anforderungen, die an solche Materialien gestellt sind, gerecht werden können.

Als Füllstoffe können z.B. Makrofiller (aus Glas, Keramik oder Quarz, Teilchengrößen zwischen 2 bis 50 µm), homogene Mikrofiller (z.B. aus pyrogener Kieselsäure, Teilchengrößen ca. 0.04 µm), inhomogene Mikrofiller (ein Teil der pyrogenen Kieselsäure liegt als Splitterpolymerisat vor), Hybridfiller (Mischung von Makro- und Mikrofillern) oder Feinsthybridfiller (z.B. Mischung aus Aerosil und Ba- oder Sr-Glas mit Teilchengrößen von 2 µm) eingesetzt werden. Dabei werden die mechanischen Eigenschaften der resultierenden, gehärteten Systeme durch die Korngröße und die Menge der Füllstoffe mitbeeinflußt. Ferner wird die Schrumpfung (je höher der Füllstoffgehalt bei gleicher Matrix, desto niedriger die Schrumpfung), die Röntgenopazität (durch Zusatz von z.B. Ba-, Sr-, Ti- oder Zr-Komponenten im Füllstoff) und der thermische Ausdehnungskoeffizient (abhängig vom Füllstoffgehalt; Füllstoffe weisen gewöhnlich einen niedrigeren Ausdehnungskoeffizienten auf als als die organische Matrix) durch den Zusatz von Füllstoffen weiter positiv beeinflußt.

Ferner ist es möglich, gehärtete erfindungsgemäße Systeme den erfindungsgemäßen, ungehärteten Systemen in feinteiliger Form als Füllstoff zuzusetzen. Dazu werden die erfindungsgemäßen Systeme durch Polyaddition und gegebenenfalls durch Polymerisation gehärtet. Das gehärtete Produkt wird getrocknet, gegebenenfalls fein vermahlen und den erfindungsgemäßen Systemen zugemischt.

Desweiteren ist es möglich, zunächst einen Teil der C=C-Doppelbindungen der Komponente 1 mit dem Amin der Komponente 2 vorzuvernetzen (z.B. gezielte Vorvemetzung bzw. Vorhärtung) und anschließend thermisch oder durch Bestrahlung mit UV- und/oder sichtbarem Licht auszuhärten. Gegenüber dem Stand der Technik wird dadurch ein Teil der sehr engmaschigen (Meth)Acrylatvernetzung durch eine weitmaschigere, variable Amninvernetzung ersetzt. Dadurch ist eine gezielte Beeinflussung z.B. der mechanischen Eigenschaften, wie etwa eine Erhöhung der Schlagzähigkeit, eine Erhöhung des Einstellbereichs des E-Moduls etc. möglich.

Auch ist es möglich, durch Addition definierter, sehr kleiner Mengen der Komponente 1 zur Komponente 2 oder umgekehrt, eine kleine Anzahl von Vernetzungsstellen zu schaffen, um damit das Molekulargewicht und die Viskosität der erfindungsgemäßen Systeme gezielt zu steigern.

Desweiteren ist eine Kombination mit Epoxid-, Isocyanat- oder Anhydrid-haltigen Systemen oder mit anderen Systemen, die sich für eine Umsetzung mit Aminogruppen eignen, möglich.

Anhand von Ausführungsbeispielen werden die erfindungsgemässen Systeme näher erläutert.

### Beispielgruppe 1

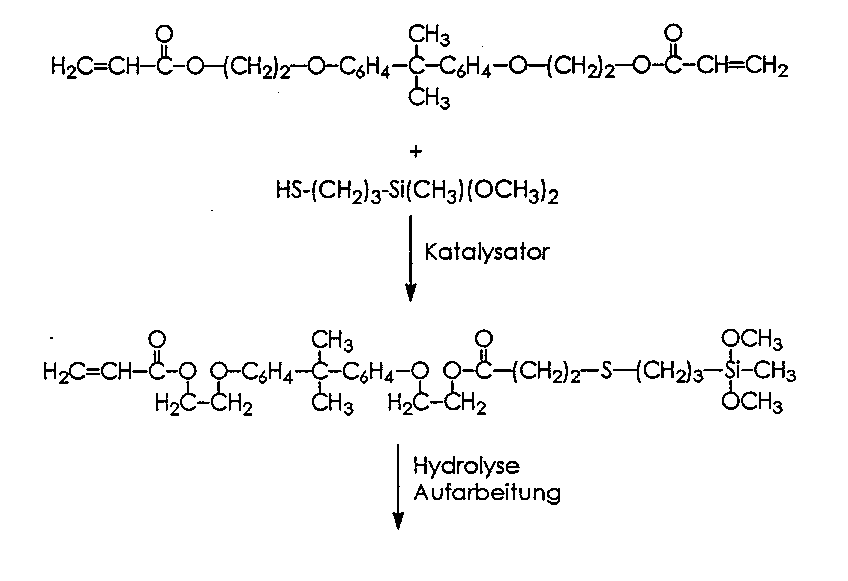

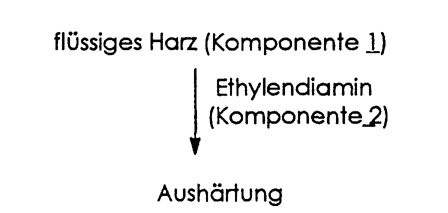

### Synthese:

Zur Vorlage von 84.8 g (0.2 mol) ethoxyliertes Bisphenol-A-Diacrylat in 200 ml Essigester werden 36.1 g (0.2 mol) Mercaptopropylmethyldimethoxysilan unter Schutzgasatmosphäre zugetropft. Unter Kühlung werden 12.6 g einer ethanolischen KOH-Lösung langsam zugetropft. Nach etwa 5 Minuten ist die Reaktion (Thioladdition) abgeschlossen. Zur Hydrolyse und Kondensation der Methoxygruppen werden 5.8 g 0.5 n HCl zugetropft. Nach ca. 1-tägigem Rühren bei Raumtemperatur wird mit Wasser ausgeschüttelt, filtriert, einrotiert und an der Ölpumpe vollständig von flüchtigen Bestandteilen befreit. Das klare Harz (Komponente 1) wird in einer Ausbeute von ca. 95 % erhalten und kann so für die folgende Aushärtung eingesetzt werden.

### Härtung:

### 1. Beispiel:

4.1 g der Komponente 1 und 0.44 g der Komponente 2 (Ethylendiamin) werden bei Raumtemperatur in einem molaren Verhältnis von 1 : 0.5 (1 C=C : 1 NH₂) ineinander gelöst und in eine Härtungsform gegeben (Ø = 2 cm; d = 2 mm). Nach ca. 3 Minuten wird die Probe fest (gummiartig).

### 2. Beispiel:

4.0 g der Komponente 1 und 0.35 g der Komponente 2 (Ethylendiamin) werden bei Raumtemperatur in einem molaren Verhältnis von 1.2 : 0.5 (1.2 C=C : 1 NH₂) ineinander gelöst und in eine Härtungsform gegeben (Ø = 2 cm; d = 2 mm). Nach ca. 3 Minuten wird die Probe fest (gummiartig). Nach ca. 1.5 Stunden ist die Reaktion abgeschlossen (bei 80 - 100 °C Nachhärtung).

### Beispielgruppe 2

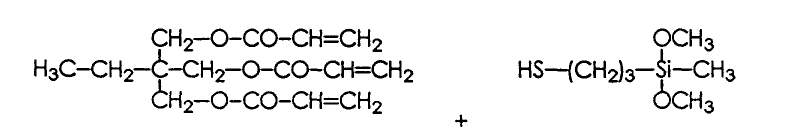

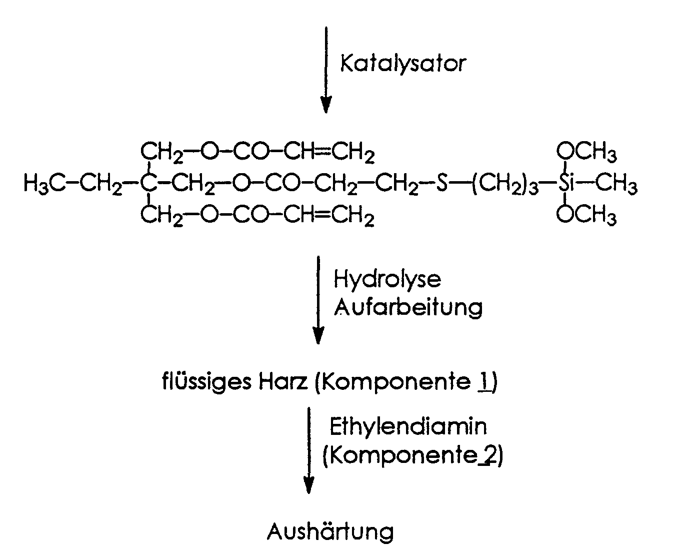

### Synthese:

Zur Vorlage von 19.3 g (0.2 mol) Trimethylolpropantriacrylat (TMPTA) in 200 ml Essigester werden 36.1 g (0.2 mol) Mercaptopropylmethyldimethoxysilan unter Schutzgasatmosphäre zugetropft. Unter Kühlung werden 12.6 g einer ethanolischen KOH-Lösung langsam zugetropft. Nach etwa 5 Minuten ist die Reaktion (Thioladdition) abgeschlossen. Zur Hydrolyse und Kondensation der Methoxygruppen werden 5.8 g 0.5 n HCl zugetropft. Nach ca. 1-tägigem Rühren bei Raumtemperatur wird mit Wasser ausgeschüttelt, filtriert, einrotiert und an der Ölpumpe vollständig von flüchtigen Bestandteilen befreit. Das klare Harz (Komponente 1) wird in einer Ausbeute von ca. 97 % erhalten und kann so für die folgende Aushärtung eingesetzt werden.

### Härtung:

### 1. Beispiel:

5.1 g der Komponente 1 und 0.64 g der Komponente 2 (Ethylendiamin) werden bei Raumtemperatur in einem molaren Verhältnis von 1.1 : 1 (1.1 C=C : 1 NH₂) ineinander gelöst und in eine Härtungsform gegeben (Ø = 2 cm; d = 2 mm). Nach ca. 1 Minute wird die Probe fest (flexibel).

### 2. Beispiel:

18.2 g der Komponente 1 und 0.64 g der Komponente 2 (Ethylendiamin) werden bei Raumtemperatur in einem molaren Verhältnis von 4 : 1 (4 C=C : 1 NH₂) ineinander gelöst und in eine Härtungsform gegeben (Ø = 2 cm; d = 2 mm). Nach ca. 4 Minuten geliert das Gemisch und nach ca. ½ Stunde ist die Probe fest (flexibel). Die restlichen Doppelbindungen (Amin im Unterschuß) stehen für andere Polymerisationsreaktionen (z.B. UV-induzierte radikalische Polymerisation) zur Verfügung.

### 3. Beispiel:

15.1 g der Komponente 1 und 0.21 g der Komponente 2 (Ethylendiamin) werden bei Raumtemperatur in einem molaren Verhältnis von 10 : 1 (10 C=C : 1 NH₂) ineinander gelöst und in eine Härtungsform gegeben (⌀ = 2 cm; d = 2 mm). Nach ca. 1,25 Stunden geliert das Gemisch und nach ca. 3 Stunden ist die Probe fest (flexibel). Die restlichen Doppelbindungen (Amin im Unterschuß) stehen für andere Polymerisationsreaktionen (z.B. UV-induzierte radikalische Polymerisation) zur Verfügung.

### 4. Beispiel: Kombination der Selbsthärtung mit einer UV-induzierten radikalischen Polymerisation

15.2 g der Komponente 1 (incl. 1 % Irgacure 184, UV-Initiator der Fa. Ciba Geigy) und 0.21 g der Komponente 2 (Ethylendiamin) werden bei Raumtemperatur in einem molaren Verhältnis von 10 : 1 (10 C=C : 1 NH₂) ineinander gelöst und in eine Stäbchenform gegeben (2×2×20 mm). Nach ca. 3 Stunden ist die Probe fest (flexibel). Die restlichen Doppelbindungen (Amin im Unterschuß) werden im Rahmen einer UV-induzierten radikalischen Polymerisation umgesetzt. Dazu werden die "selbstgehärteten" Stäbchen beidseitig je 100 Sekunden mit einem UV-Punktstrahler der Fa. Hönle bestrahlt. Mittels 3-Punkt-Biegeversuch wird das E-Modul des resultierenden Stäbchens bestimmt:
E-Modul = 900 MPa (± 93)

Zum Vergleich der E-Modul einer Probe (mit den gleichen Dimensionen), die nur durch UV-Härtung und ohne Amin-Zusatz erhalten wurde :
E-Modul = 1520 MPa (± 67)

Durch den Einbau einiger langkettiger Vernetzungsstellen (10 Mol-% aliphatisches Diamin) im Vergleich zur reinen engmaschigen radikalischen Vernetzung der Acrylatgruppen wird ein drastischer Einfluß auf die mechanischen Eigenschaften beobachtet. Das E-Modul fällt durch diese Maßnahme von 1520 MPa auf 900 MPa und somit nimmt die Flexibilität des Materials deutlich zu. Damit ergibt sich die Möglichkeit, z.B. die mechanischen Eigenschaften der Werkstoffe auf Basis der (Meth)Acrylatalkoxysilane durch Modifikation mit unterschiedlich strukturierten Aminen in weiten Grenzen zu variieren.

### Beispielgruppe 3

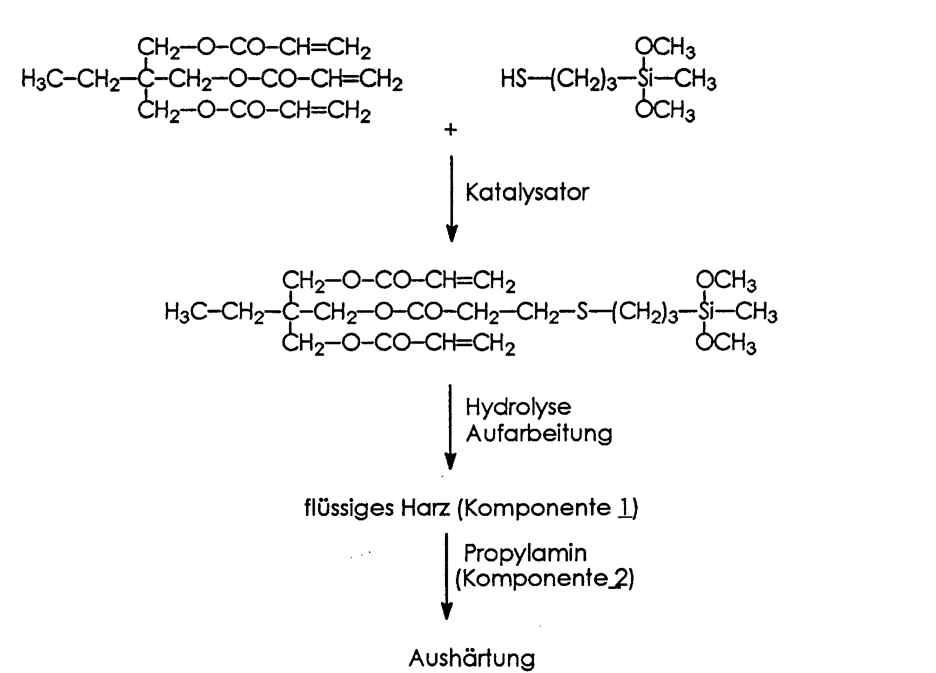

### Synthese:

Zur Vorlage von 19.3 g (0.2 mol) Trimethylolpropantriacrylat (TMPTA) in 200 ml Essigester werden 36.1 g (0.2 mol) Mercaptopropylmethyldimethoxysilan unter Schutzgasatmosphäre zugetropft. Unter Kühlung werden 12.6 g einer ethanolischen KOH-Lösung langsam zugetropft. Nach etwa 5 Minuten ist die Reaktion (Thioladdition) abgeschlossen. Zur Hydrolyse und Kondensation der MethoxyGruppen werden 5.8 g 0.5 n HCl zugetropft. Nach ca. 1-tägigem Rühren bei Raumtemperatur wird mit Wasser ausgeschüttelt, filtriert, einrotiert und an der Ölpumpe vollständig von flüchtigen Bestandteilen befreit. Das klare Harz (Komponente 1) wird in einer Ausbeute von ca. 97 % erhalten und kann so für die folgende Aushärtung eingesetzt werden.

### Härtung:

3.22 g der Komponente 1 und 0.44 g der Komponente 2 (Propylamin) werden bei Raumtemperatur in einem molaren Verhältnis von 1 : 1 (2 C=C : 1 NH₂) ineinander gelöst und in eine Härtungsform gegeben (Ø = 2 cm; d = 2 mm). Nach ca. 2 Stunden geliert das Gemisch und ist nach ca. 18 Stunden klebfrei (hart und wenig flexibel).

Hier findet überraschenderweise eine 2-fache Addition der Aminogruppen statt. Zuerst Addition zum sekundären Amin und während der weiteren Härtung die zweite Addition zum tertiären Amin.

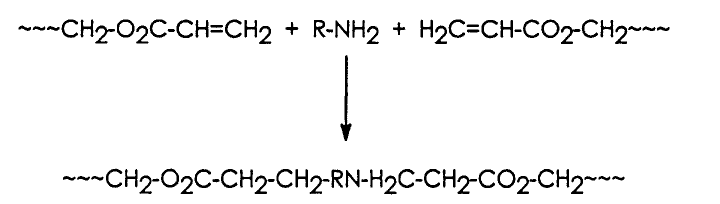

Daraus resultiert eine sehr kurzkettige Vernetzung der Acrylatgruppen und damit ist das Material nicht mehr hochflexibel wie im 4. Beispiel der Beispielgruppe 2, sondern mit einem hohen E-Modul ausgestattet. Diese Harzmatrix führt somit zu einem Polymer mit sehr unterschiedlichen mechanischen Eigenschaften, die durch unterschiedlich substituierte Amine einstellbar sind.

### Beispielgruppe 4

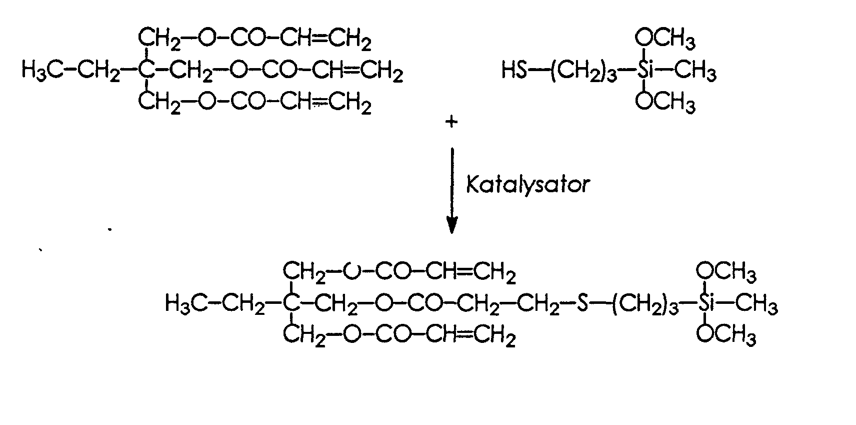

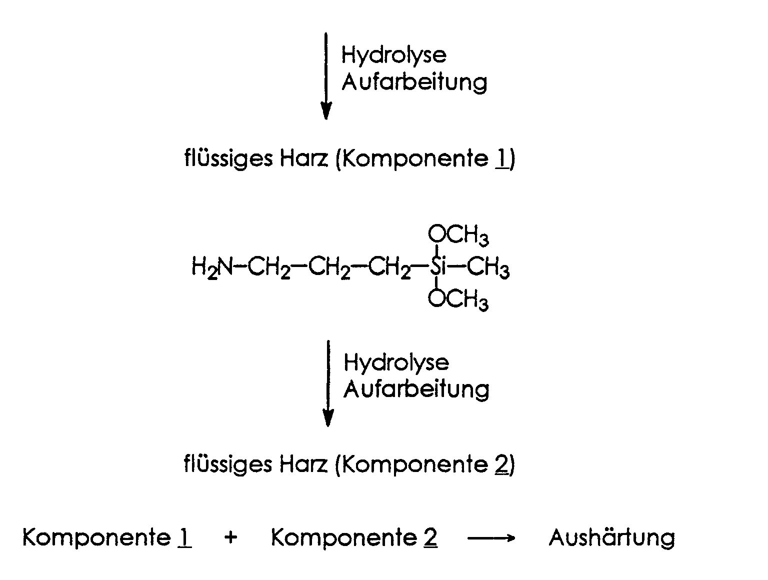

### Synthese :

### Komponente 1 :

Zur Vorlage von 19.3 g (0.2 mol) Trimethylolpropantriacrylat (TMPTA) in 200 ml Essigester werden 36.1 g (0.2 mol) Mercaptopropylmethyldimethoxysilan unter Schutzgasatmosphäre zugetropft. Unter Kühlung werden 12.6 g einer ethanolischen KOH-Lösung langsam zugetropft. Nach etwa 5 Minuten ist die Reaktion (Thioladdition) abgeschlossen. Zur Hydrolyse und Kondensation der Methoxygruppen werden 5.8 g 0.5 n HCl zugetropft. Nach ca. 1-tägigem Rühren bei Raumtemperatur wird mit Wasser ausgeschüttelt, filtriert, einrotiert und an der Ölpumpe vollständig von flüchtigen Bestandteilen befreit. Das klare Harz (Komponente 1) wird in einer Ausbeute von ca. 97 % erhalten und kann so für die folgende Aushärtung eingesetzt werden.

### Komponente 2 :

Zur Vorlage von 38.3 g (0.2 mol) Aminopropylmethyldimethoxysilan in 100 ml Essigester werden zur Hydrolyse und Kondensation der Methoxygruppen 5.8 g Wasser (incl. Katalysator) zugetropft. Nach ca. eintägigem Rühren bei Raumtemperatur wird einrotiert und an der Ölpumpe vollständig von flüchtigen Bestandteilen befreit. Das klare Harz (Komponente 2) wird in einer Ausbeute von ca. 95 % erhalten und kann so für die folgende Aushärtung eingesetzt werden.

### Härtung :

5.0 g der Komponente 1 und 2.7 g der Komponente 2 werden bei Raumtemperatur in einem molaren Verhältnis von 1 : 2 (1 C=C : 1 NH₂) ineinander gelöst und in eine Härtungsform gegeben (Ø = 2 cm; d = 2 mm). Nach ca. 2 Minuten geliert das Gemisch und ist nach kurzer Zeit klebfrei.

Die Reaktionsgeschwindigkeit, d.h. die Bearbeitungszeit nach Zusammengeben von Komponente 1 und 2 ist durch die Wahl der Temperatur, (Kühlen, Heizen), durch die Reaktivität der Aminkomponente (Basizität, sterische Verhältnisse, etc.) sowie durch die Reaktivität der Komponente 1 (z.B. Methacryl-, Acrylgruppen, Anzahl der Doppelbindungen, etc.) steuerbar.

## Patentansprüche

1. Kovalent-nucleophil selbsthärtendes System auf der Basis polymerisierbarer und hydrolytisch kondensierbarer und/oder hydrolytisch kondensierter Silicium-Verbindungen, bestehend aus einer Komponente 1 und einer Komponente 2, **dadurch gekennzeichnet, dass** die Komponente 1 eine oder mehrere Silicium-Ver-bindungen der Formel I und/oder von diesen abgeleitete Vorkondensate und/ oder Kondensate enthält,
{XₐR_{b}Si[R'A]_{(4-a-b)}}ₓB (I)
in der die Reste und Indices gleich oder verschieden sind und
A gleich O, S, PR'', POR", NHC(O)O oder NHC(O)NR" bedeutet, mit R" gleich Wasserstoff, Alkyl oder Aryl,
B ein geradkettiger oder verzweigter organischer Rest ist, der sich von einer Verbindung B' mit mindestens einer (für NHC(O)O oder NHC(O)NR'') bzw. mindestens zwei C=C-Doppelbindungen und 5 bis 50 Kohlenstoff-Atomen ableitet,
R gleich Alkyl, Alkenyl, Aryl, Alkylaryl oder Arylalkyl ist,
R' gleich Alkylen, Arylen oder Alkylenarylen ist,
X gleich Wasserstoff, Halogen, Hydroxy, Alkoxy, Acyloxy, Alkylcarbonyl, Alkoxycarbonyl oder NR''₂ ist, mit R" gleich Wasserstoff, Alkyl oder Aryl,
a gleich 1, 2 oder 3,
b gleich 0, 1 oder 2, mit a+b gleich 1, 2 oder 3, und
x gleich einer ganzen Zahl, deren Maximalwert der Anzahl von Doppelbindungen in der Verbindung B' minus 1 entspricht, bzw. gleich der Anzahl von Doppelbindungen in der Verbindung B' ist, wenn A für NHC(O)O oder NHC(O)NR'' steht,
wobei die obigen Alkyl- bzw. Alkenyl-Reste gegebenenfalls substituierte ge-radkettige, verzweigte oder cyclische Reste mit 1 bzw. 2 bis 20 Kohlenstoff-Atomen sind, Aryl für gegebenenfalls substituiertes Phenyl, Naphthyl oder Biphenyl steht und sich die obigen Alkoxy-, Acyloxy-, Alkylcarbonyl-, Alkoxycarbonyl-, Alkylaryl-, Arylalkyl-, Arylen-, Alkylen- und Alkylenaryl-Reste von den oben definierten Alkylund Aryl-Resten ableiten,
und dass die Komponente 2 eine oder mehrere Verbindungen der allgemeinen Formeln II und/oder III und/oder IV und/oder V und/oder VI und/oder von den Verbindungen der Formeln V und VI abgeleitete (Vor)Kondensate enthält,
R"₂N-R³-NR"₂ (II) 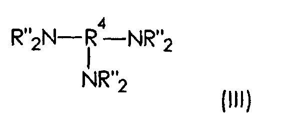 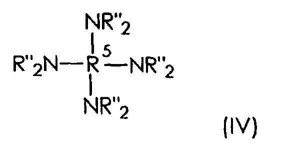
XₐSi(R'-NR"₂)₄₋ₐ (V)
XₐSi(R'-NR"-R'-NR"₂)₄₋ₐ (VI)
in denen die Reste R' und R" gleich oder verschieden sind, X, R', R" und a wie im Falle der allgemeinen Formel I definiert sind, R³, R⁴ und R⁵ einen gegebenenfalls substituierten Alkylen-, Arylen-, Arylenalkylen- oder Alkylenarylen-Rest mit 1 bis 20 Kohlenstoff-Atomen darstellen, der geradkettig, verzweigt oder cyclisch ist, wobei Aryl für gegebenenfalls substituiertes Phenyl, Naphthyl oder Biphenyl steht, und in denen die Amino-Gruppen der Verbindungen mit den Formeln (II) bis (IV) an einem oder an mehreren verschiedenen Kohlenstoff-Atomen sitzen, wobei die Mehrzahl für Formel (II) zwei ist, für Formel (III) zwei oder drei ist und für Formel (IV) zwei, drei oder vier ist.

2. Kovalent-nucleophil selbsthärtendes System nach Anspruch 1, **dadurch gekennzeichnet, dass** die Komponente 1 übliche Additive und/oder Füllstoffe und/oder weitere copolymerisierbare Monomere und/oder Oligomere und/oder weitere hydrolytisch kondensierbare und/oder kondensierte Verbindungen des Siliciums und/oder anderer Elemente aus der Gruppe Al, Ti, Zr, B, P, Sn, Pb, der Übergangsmetalle, der Lanthaniden und der Actiniden enthält.

3. Kovalent-nucleophil selbsthärtendes System nach Anspruch 1 oder 2, **dadurch gekennzeichnet, dass** in der allgemeinen Formel I die Reste und Indices folgende Bedeutung haben:
X = (C₁-C₄)-Alkoxy, bevorzugt Methoxy und Ethoxy, oder Halogen, bevorzugt Chlor;
R = (C₁-C₄)-Alkyl, bevorzugt Methyl und Ethyl;
R' = (C₁-C₄)-Alkylen, bevorzugt Methylen und Propylen.

4. Kovalent-nucleophil selbsthärtendes System nach einem oder mehreren der Ansprüche 1 bis 3, **dadurch gekennzeichnet, dass** in der allgemeinen Formel I die Einheit mit dem Index x ausgewählt ist aus 3-Methyldimethoxysilyl-propylthio, 3-Triethoxysilyl-propylthio, Ethoxydimethylsilyl-methylthio, Methyldiethoxysilyl-methylthio oder 3-Triethoxysilyl-propylurethan.

5. Kovalent-nucleophil selbsthärtendes System nach einem oder mehreren der Ansprüche 1 bis 4, **dadurch gekennzeichnet, dass** sich in der allgemeinen Formel I B von einer substituierten oder unsubstituierten Verbindung B' mit zwei oder mehreren Acrylat- und/oder Methacrylat-Gruppen ableitet.

6. Kovalent-nucleophil selbsthärtendes System nach Anspruch 5, **dadurch gekennzeichnet, dass** sich in der allgemeinen Formel I B von Acrylsäureestern von Trimethylolpropan, Pentaerythrit, Dipentaerythrit, C₂-C₄-Alkandiolen, Polyethylenglycolen, Polypropylenglycolen oder gegebenenfalls substituiertem und/oder alkoxyliertem Bisphenol A ableitet.

7. Kovalent-nucleophil selbsthärtendes System nach einem oder mehreren der Ansprüche 1 bis 6, **dadurch gekennzeichnet, dass** die Komponente 2 eines oder mehrere Amine mit kovalent gebundenen Farbstoffen, UV-Absorbern oder Biomolekülen enthält.

8. Kovalent-nucleophil selbsthärtendes System nach einem oder mehreren der Ansprüche 1 bis 7, **dadurch gekennzeichnet, dass** Komponente 1 und/oder 2 als weitere hydrolytisch kondensierbare Verbindungen des Siliciums eine oder mehrere Verbindungen der allgemeinen Formel VII und/oder von dieser abgeleitete (Vor)Kondensate enthält,
Rₓ(R²Z)_{y}SiX_{4-(x+y)} (VII)
in der die Reste und Indices gleich oder verschieden sind und folgende Bedeutung haben:
R = Alkyl, Alkenyl, Aryl, Alkylaryl oder Arylalkyl,
R² = Alkylen oder Alkenylen, wobei diese Reste durch Sauerstoff- oder Schwefel-Atome oder -NH-Gruppen unterbrochen sein können,
X = Wasserstoff, Halogen, Hydroxy, Alkoxy, Acyloxy, Alkylcarbonyl, Alkoxycarbonyl oder NR"₂, mit R" = Wasserstoff, Alkyl oder Aryl,
Z = Halogen oder eine gegebenenfalls substituierte Amino-, Amid-, Aldehyd-, Alkylcarbonyl-, Carboxy-, Mercapto-, Cyano-, Alkoxy-, Alkoxycarbonyl-, Sulfonsäure-, Phosphorsäure-, Acryloxy-, Methacryloxy-, Epoxy- oder Vinyl-Gruppe,
x = 0, 1, 2, oder 3,
y = 0, 1, 2, oder 3, mit x+y = 1,2 oder 3.

9. Kovalent-nucleophil selbsthärtendes System nach einem oder mehreren der Ansprüche 1 bis 8, **dadurch gekennzeichnet, dass** Komponente 1 und/oder 2 als weitere hydrolytisch kondensierbare Verbindungen des Siliciums eine oder mehrere Verbindungen der allgemeinen Formel VIII und/oder von dieser abgeleitete (Vor)Kondensate enthält,
Yₙ Si Xₘ R_{4 - (n + m)} (VIII)
in der die Reste und Indices gleich oder verschieden sind und folgende Bedeutung haben:
R = Alkyl, Alkenyl, Aryl, Alkylaryl oder Arylalkyl,
X = Wasserstoff, Halogen, Hydroxy, Alkoxy, Acyloxy, Alkylcarbonyl, Alkoxycarbonyl oder NR"₂, mit R" = Wasserstoff, Alkyl oder Aryl,
Y = ein Substituent mit einem substituierten oder unsubstituierten 1,4,6-Trioxaspiro-[4,4]-nonan-Rest,
n = 1, 2 oder 3,
m = 1, 2 oder 3, mit n+m ≤ 4.

10. Kovalent-nucleophil selbsthärtendes System nach einem oder mehreren der Ansprüche 1 bis 9, **dadurch gekennzeichnet, dass** Komponente 1 und/oder 2 als weitere hydrolytisch kondensierbare Verbindungen eine oder mehrere Aluminium, Titan- oder Zirkonium-Verbindungen der allgemeinen Formel IX und/oder X und/oder von diesen abgeleitete Vorkondensate enthält,
(IX) AIR°₃
M Xₖ Rₗ (X)
in der die Reste und Indices gleich oder verschieden sind und folgende Bedeutung haben:
M = Titan oder Zirkonium
R° = Halogen, Hydroxy, Alkoxy oder Acyloxy,
k = 1, 2, 3 oder 4, insbesondere 2, 3 oder 4,
l = 0, 1, 2 oder 3, vorzugsweise 0, 1 oder 2,
X = wie im Falle der allgemeinen Formel I definiert,
R = wie im Falle der allgemeinen Formel I definiert.

11. Kovalent-nucleophil selbsthärtendes System nach einem oder mehreren der Ansprüche 1 bis 10, **dadurch gekennzeichnet, dass** Komponente 1 und/oder 2 thermisch und/oder strahlungsinduziert copolymerisierbare Monomere und/oder Oligomere und/oder Polymere enthält.

12. Kovalent-nucleophil selbsthärtendes System nach einem oder mehreren der Ansprüche 1 bis 11, **dadurch gekennzeichnet, dass** Komponente 1 und/oder 2 selbsthärtend copolymerisierbare Monomere und/oder Oligomere und/oder Polymere enthält.

13. Verwendung der kovalent-nucleophil selbsthärtenden Systeme nach einem oder mehreren der Ansprüche 1 bis 12 als Vergussmassen, Klebstoffe, Dichtungsmassen, Beschichtungsmassen, in Formgebungsverfahren, zur Füllstoffherstellung, als Komposit oder Bindemittel, in der Abform- und Verbindungstechnik und zur Herstellung von Fasern oder Folien.

## Claims

1. A covalently-nucleophilic, self-hardening system based on polymerisable and hydrolytically condensable and/or hydrolytically condensed silicon compounds, consisting of a component 1 and a component 2, **characterised in that** component 1 contains one or more silicon compounds of formula I and/or precondensates and/or condensates derived therefrom,
{Xₐ R_{b} Si [R'A] _{(4 - a - b)}}ₓ B (I)
in which the residues and indices are identical or different, and
A is O, S, PR", POR", NHC(O)O or NHC(O)NR", where R" is hydrogen, alkyl or aryl,
B is a straight-chain or branched organic residue derived from a compound B' having at least one (for NHC(O)O or NHC(O)NR") or at least two C=C double bonds and 5 to 50 carbon atoms,
R is alkyl, alkenyl, aryl, alkylaryl or arylalkyl,
R' is alkylene, arylene or alkylenearylene,
X is hydrogen, halogen, hydroxy, alkoxy, acyloxy, alkylcarbonyl, alkoxycarbonyl, or NR"₂, where R" is hydrogen, alkyl or aryl,
a is 1, 2 or 3,
b is 0, 1 or 2, where a+b = 1, 2 or 3, and
x is a whole number, the maximum value of which corresponds to the number of double bonds in the compound B' minus 1 or is equal to the number of double bonds in the compound B' when A stands for NHC(O)O or NHC(O)NR",
wherein the above alkyl or alkenyl residues are optionally substituted straight-chain, branched or cyclic residues with 1 or 2 to 20 carbon atoms respectively, aryl stands for optionally substituted phenyl, naphthyl or biphenyl, and the above alkoxy, acyloxy, alkylcarbonyl, alkoxycarbonyl, alkylaryl, arylalkyl, arylene, alkylene and alkylenearyl residues are derived from the alkyl and aryl residues defined above,
and **in that** component 2 contains one or more compounds of the general formula II and/or III and/or IV and/or V and/or VI and/or (pre)condensates derived from the formula V and VI compounds,
R"₂N - R³ - N R"₂ (II) 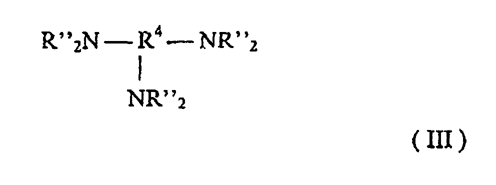 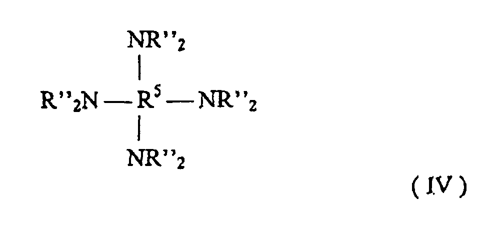
{Xₐ Si (R'- N R"₂)₄₋ₐ (V)
{Xₐ Si(R'-N R"-R'-N R"₂)₄₋ₐ (VI)
in which the residues R' and R" are identical or different, X, R' R" and a are defined as in the case of general formula I, R³, R⁴ and R⁵ represent an optionally substituted alkylene, arylenc or arylenealkylene or alkylenearylene residue having 1 to 20 carbon atoms which is straight-chain, branched or cyclic, wherein aryl stands for optionally substituted phenyl, naphthyl or biphenyl, and in which the amino groups of the compounds of formulas (II) to (IV) are attached to one or to a plurality of different carbon atoms, the plural being two for formula (II), two or three for formula (III), and two, three or four for formula (IV).

2. A covalently-nucleophilic, self-hardening system according to Claim 1, **characterised in that** component 1 contains conventional additives and/or fillers and/or further copolymerisable monomers and/or oligomers and/or further hydrolytically condensable and/or condensed silicon compounds and/or other elements from the group Al, Ti, Zr, B, P, Sn, Pb, the transition metals, lanthanides and actinides.

3. A covalently-nucleophilic, self-hardening system according to Claim 1 or 2, **characterised in that** the residues and indices in general formula I have the following meanings:
X = (C₁-C₄)-alkoxy, preferably methoxy and ethoxy, or halogen, preferably chlorine;
R = (C₁-C₄)-alkyl, preferably methyl and ethyl;
R' = (C₁-C₄)-alkylene, preferably methylene and propylene.

4. A covalently-nucleophilic, self-hardening system according to one or more of Claims 1 to 3, **characterised in that** the unit in general formula I having the index x is selected from 3-methyldimethoxysilylpropylthio, 3-triethoxysilylpropylthio, ethoxy-dimethylsilylmethylthio, methyldiethoxysilylmethylthio or 3-triethoxysilylpropyl-urethane.

5. A covalently-nucleophilic, self-hardening system according to one or more of Claims 1 to 4, **characterised in that** B in general formula I is derived from a substituted or unsubstituted compound B' having two or more acrylate and/or methacrylate groups.

6. A covalently-nucleophilic, self-hardening system according to Claim 5, **characterised in that** B in general formula I is derived from acrylic acid esters of trimethylolpropane, pentaerythritol, dipentaerythritol, C₂-C₄- alkanediols, polyethylene glycols, polypropylene glycols or optionally substituted and/or alkoxylated bisphenol A.

7. A covalently-nucleophilic, self-hardening system according to one or more of Claims 1 to 6, **characterised in that** component 2 contains one or more amines with covalently-bound pigments, UV absorbers or biomolecules.

8. A covalently-nucleophilic, self-hardening system according to one or more of Claims 1 to 7, **characterised in that**, as further hydrolytically condensable compounds of silicon, component 1 and/or 2 contains one or more compounds of the general formula VII and/or (pre)condensates derived therefrom,
Rₓ(R²Z)_{y}SiX_{4-(x+y)} (VII)
in which the residues and indices are identical or different and have the following meanings:
R = alkyl, alkenyl, aryl, alkylaryl or arylalkyl,
R² = alkylene or alkenylene, wherein these residues may be interrupted by oxygen or sulfur atoms or -NH groups,
X = hydrogen, halogen, hydroxy, alkoxy, acyloxy, alkylcarbonyl, alkoxycarbonyl or NR"₂, where R" = hydrogen, alkyl or aryl,
Z = halogen or an optionally substituted amino, amide, aldehyde, alkylcarbonyl, carboxy, mercapto, cyano, alkoxy, alkoxycarbonyl, sulfonic acid, phosphoric acid, acryloxy, methacryloxy, cpoxy or vinyl group,
x = 0, 1, 2 or 3,
y = 0, 1, 2 or 3, where x+y = 1, 2 or 3.

9. A covalently-nucleophilic, self-hardening system according to one or more of Claims 1 to 8, **characterised in that**, as further hydrolytically condensable compounds of silicon, component 1 and/or 2 contains one or more compounds of the general formula VIII and/or (pre)condensates derived therefrom,
Yₙ Si Xₘ R₄₋₍ₙ₊ₘ₎ (VIII)
in which the residues and indices are identical or different and have the following meanings:
R = alkyl, alkenyl, aryl, alkylaryl or arylalkyl,
X = hydrogen, halogen, hydroxy, alkoxy, acyloxy, alkylcarbonyl, alkoxycarbonyl or NR"₂, where R" = hydrogen, alkyl or aryl,
Y = a substituent with a substituted or unsubstituted 1,4,6-trioxaspiro-[4,4]-nonane residue,
n = 1, 2 or 3,
m = 1, 2 or 3, where n+m ≤ 4.

10. A covalently-nucleophilic, self-hardening system according to one or more of Claims 1 to 9, **characterised in that**, as further hydrolytically condensable compounds, component 1 and/or 2 contains one or more aluminium, titanium or zirconium compounds of the general formula IX and/or X and/or precondensates derived therefrom,
(IX) AIR°₃
M Xₖ Rₗ (X)
in which the residues and indices are identical or different and have the following meanings:
M = titanium or zirconium,
R° = halogen, hydroxy, alkoxy or acyloxy,
k = 1, 2, 3 or 4, in particular 2, 3 or 4,
l = 0, 1, 2 or 3, preferably 0, 1 or 2,
X = as defined in general formula I,
R = as defined in general formula I.

11. A covalently-nucleophilic, self-hardening system according to one or more of Claims 1 to 10, **characterised in that** component 1 and/or 2 contains monomers and/or oligomers and/or polymers copolymerisable thermally or by radiation induction.

12. A covalently-nucleophilic, self-hardening system according to one or more of Claims 1 to 11, **characterised in that** component 1 and/or 2 contains self-hardening copolymerisable monomers and/or oligomers and/or polymers.

13. Use of the covalently-nucleophilic, self-hardening systems according to one or more of Claims 1 to 12 as casting compounds, adhesives, sealing compounds, coating compounds, in shaping processes, in the manufacture of fillers, as a composite or binder, in moulding and bonding techniques, and in the manufacture of fibres or films.

## Revendications

1. Système auto-durcissant covalent - nucléophile à base de composés du silicium polymérisables et hydrolytiquement condensables et/ou hydrolytiquement condensés, constitué d'un composant 1 et d'un composant 2,
**caractérisé en ce que**
le composant 1 contient un ou plusieurs composé(s) du silicium répondant à la formule I et/ou pré-condensat(s) et/ou condensat(s) dérivé(s) de ce(s) dernier(s),
{XₐR_{b}Si[R'A]_{(4-a-b)}}ₓB (1)
dans laquelle les restes et indices sont identiques ou différents et
A représente indifféremment O, S, PR", POR", NHC(O)O ou NHC(O)NR", R" représentant indifféremment un atome d'hydrogène, un groupe alkyle ou aryle,
B représente un reste organique à chaîne droite ou ramifié, qui dérive d'un composé B' comportant au moins une (pour NHC(O)O ou NHC(O)NR") ou au moins deux double(s) liaison(s) C=C et 5 à 50 atomes de carbone,
R représente indifféremment un groupe alkyle, alcényle, aryle ou arylalkyle,
R' représente indifféremment un groupe alklène, arylène ou alkylènarylène,
X représente indifféremment un atome d'hydrogène, un atome d'halogène, un groupe hydroxy, alcoxy, acyloxy, alkylcarbonyle, alcoxycarbonyle ou NR"₂, R" représentant indifféremment un atome d'hydrogène, un groupe alkyle ou aryle,
a est égal à 1, 2 ou 3,
b est égal à 0, 1, ou 2, avec a + b = 1, 2 ou 3, et
x représente un nombre entier, dont la valeur maximale correspond au nombre de doubles liaisons dans le composé B' moins 1, ou re-présente le nombre de doubles liaisons dans le composé B', lorsque A représente NHC(O)O ou NHC(O)NR",
les restes alkyle et alcényle ci-dessus étant des restes à chaîne droite, ramifiés ou cycliques, le cas échéant substitués, comportant 1 ou 2 à 20 atome(s) de carbone, aryle représentant un groupe phényle, naphthyle ou biphényle le cas échéant substitué, et les restes alcoxy, acyloxy, alkylcarbonyle, alcoxycarbonyle, alkylaryle, arylalkyle, arylène, alkylène et alkylènaryle ci-dessus dérivant des restes alkyle et aryle ci-dessus définis,
et le composant 2 contient un ou plusieurs composant(s) répondant aux formules générales II et/ou III et/ou IV et/ou V et/ou VI et/ou (pré)-condensats dérivé(s) des composés des formules V et VI,
R"₂N - R³ - N R"₂ (II) 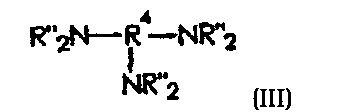 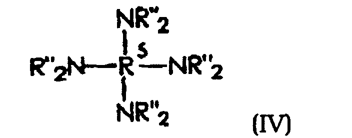
Xₐ Si (R' - N R"₂) _{4 - a} (V)
Xₐ Si (R' - N R" - R' - N R"₂)_{4 - a} (VI)
dans lesquelles les restes R' et R" sont identiques ou différents, X, R', R" et a sont définis comme dans le cas de la formule générale I, R³, R⁴ et R⁵ représentent un reste alkylène, arylène, arylènalkylène ou alkylènarylène le cas échéant substitué, comportant 1 à 20 atome(s) de carbone, qui est à chaîne droite, ramifié ou cyclique, aryle représentant un groupe phényle, naphthyle ou biphényle le cas échéant substitué, et dans lesquelles les groupes amino des composés répondant aux formules (II) à (IV) se trouvent sur un atome ou plusieurs atomes de carbone différents, la majorité étant deux pour la formule (II), deux ou trois pour la formule (III) et pour la formule (IV), deux, trois ou quatre.

2. Système auto-durcissant covalent - nucléophile selon la revendication 1,
**caractérisé en ce que**
le composant 1 contient des additifs et/ou charges courant(e)s et/ou d'autres monomères et/ou oligomères copolymérisables et/ou d'autres composés du silicium hydrolytiquement condensables et/ou hydrolytiquement condensés et/ou d'autres éléments du groupe Al, Ti, Zr, B, P, Sn, Pb, des métaux de transition, des lanthamides et des actinides.

3. Système auto-durcissant covalent - nucléophile selon la revendication 1 ou 2,
**caractérisé en ce que**
dans la formule générale 1, les restes et indices ont la signification suivante:
X = alcoxy en C₁-C₄, de préférence méthoxy et éthoxy, ou halogène, de préférence chlore,
R = alkyle en C₁-C₄, de préférence méthyle et éthyle;
R' = alkylène en C₁-C₄, de préférence méthylène et propylène.

4. Système auto-durcissant covalent - nucléophile selon une ou plusieurs des revendications 1 à 3,
**caractérisé en ce que**
dans la formule générale 1, l'unité avec l'indice x est choisie parmi : 3-méthyldiméthoxysilyl-propylthio, 3-triéthoxysilyl-propylthio, éthoxydiméthylsilyl-méthylthio, méthyldiéthyloxyxilyl-méthylthio et 3-triéthoxysilyl-propyluréthanne.

5. Système auto-durcissant covalent - nucléophile selon une ou plusieurs des revendications 1 à 4,
**caractérisé en ce que**
dans la formule générale 1, B, dérive d'un composé B' substitué ou non substitué comportant deux ou plusieurs groupes acrylate et/ou méthacrylate.

6. Système auto-durcissant covalent - nucléophile selon la revendication 5,
**caractérisé en ce que**
dans la formule générale 1, B dérive d'esters de l'acide acrylique de triméthylolpropane, pentaérythrite, dipentaérythrite, alcanediols en C₂-C₄, polyéthylèneglycols, polypropylèneglycols ou bisphénol A le cas échéant substitué et/ ou alcoxylé.

7. Système auto-durcissant covalent - nucléophile selon une ou plusieurs des revendications 1 à 6,
**caractérisé en ce que**
le composant 2 contient une ou plusieurs amine(s) avec des colorants, des absorbeurs d'UV ou des biomolécules lié(e)s par covalence.

8. Système auto-durcissant covalent - nucléophile selon une ou plusieurs des revendications 1 à 7,
**caractérisé en ce que**
le(s) composant(s) 1 et/ou 2 contient (contiennent) comme autres composés hydrolytiquement condensables du silicium, un ou plusieurs composés répondant à la formule générale VII et/ou (pré)-condensat(s) dérivé(s) de ce(s) dernier(s).
Rₓ(R²Z)_{y}SiX_{4-(x+y)} (VII)
dans laquelle les restes et indices sont identiques ou différents et ont les significations suivantes:
R = alkyle, alcényle, aryle, alkylaryle ou arylakyle,
R² = alkylène ou alcénylène, ces restes pouvant être interrompus par des atomes d'oxygène ou de soufre ou des groupes - NH,
X = hydrogène, halogène, hydroxy, alcoxy, acyloxy, alkylcarbonyle, alcoxycarbonyle ou NR"₂, avec R" = hydrogène, alkyle ou aryle
Z = halogène ou un groupe amino, amide, aldéhyde, alkylcarbonyle, carboxy, mercapto, cyano, alcoxy, alcoxycarbonyle, acide sulfonique, acide phosphorique, acryloxy, méthacrylaoxy, époxy ou vinyle, le cas échéant substitué,
x = 0, 1, 2 ou 3
y = 0, 1, 2 ou 3, avec m + y = 1, 2 ou 3.

9. Système auto-durcissant covalent - nucléophile selon une ou plusieurs des revendications 1 à 8,
**caractérisé en ce que**
le(s) composant(s) 1 et/ou 2 contient (contiennent) comme autres composés hydrolytiquement condensables du silicium, un ou plusieurs composé(s) répondant à la formule générale VIII et/ou (pré)-condensat(s) dérivé(s) de ce(s) dernier(s)
Yₙ Si Xₘ R₄₋₍ₙ₊ₘ₎ (VIII)
dans laquelle les restes et indices sont identiques ou différents et ont les significations suivantes:
R = alkyle, alcényle, aryle, alkylaryle ou arylakyle,
X = hydrogène, halogène, hydroxy, alcoxy, acyloxy, alkylcarbonyle, alcoxycarbonyle ou NR"₂, avec R" = hydrogène, alkyle ou aryle,
Y = un substituant avec un reste 1,4,6-trioxaspiro-4,4)-nonane substitué ou non substitué,
n = 1, 2 ou 3
m = 1, 2 ou 3 avec n + m ≤4

10. Système auto-durcissant covalent - nucléophile selon une ou plusieurs des revendications 1 à 9,
**caractérisé en ce que**
le(s) composant(s) 1 et/ou 2 contient (contiennent) comme autres composés hydrolytiquement condensables un ou plusieurs composé(s) de l'aluminium, du titane ou du zirconium répondant à la formule générale IX et/ou X et/ou (pré)-condensats dérivés de ce(s) dernier(s),
(IX) AIR°₃
M Xₖ Rₗ (X),
dans lesquelles les restes et indices sont identiques ou différents et ont les significations suivantes:
M = titane ou zirconium
R° = halogène, hydroxy, alcoxy ou acyloxy,
k = 1, 2, 3 ou 4, en particulier 2, 3 ou 4
l = 0, 1, 2 ou 3, en particulier 0, 1 ou 2
x est comme défini dans le cas de la formule générale 1,
R est comme défini dans le cas de la formule générale 1.

11. Système auto-durcissant covalent - nucléophile selon une ou plusieurs des revendications 1 à 10,
**caractérisé en ce que**
le(s) composant(s) 1 et/ou 2 contient (contiennent) des monomères et/ou des oligomères et/ou des polymères copolymérisables par voie thermique et/ou radio-induite.

12. Système auto-durcissant covalent - nucléophile selon une ou plusieurs des revendications 1 à 11,
**caractérisé en ce que**
le(s) composant(s) 1 et/ou 2 contient (contiennent) des monomères et/ou des oligomères et/ou des polymères copolymérisables auto-durcissants.

13. Utilisation des systèmes auto-durcissants covalents nucléophiles selon une ou plusieurs des revendications 1 à 12, comme masses d'enrobage, adhésifs, masses d'étanchéité, masses de revêtement, dans les procédés de formage, pour la fabrication de charges, comme composite ou liant dans la technique de moulage et d'assemblage et pour la fabrication de fibres ou feuilles.
